# EUROPEAN PATENT APPLICATION

(11) **EP 4 459 454 A2**
(43) Date of publication of application: **06.11.2024**
(21) Application number: 24201203.7
(22) Date of filing: 28.06.2021
(51) Int. Cl.: G06F 5/08

(54) **NUMERICAL PRECISION IN DIGITAL MULTIPLIER CIRCUITRY**

(30) Priority: 07.01.2021 US 202163134941 P
(62) Divisional of application: 21918010.6
(71) Applicant: Groq, Inc., Mountain View, CA 94041 (US)
(72) Inventor: WERNER, Jeffrey, 94041 Mountain View (US); ROSS, Jonathan, 94041 Mountain View (US); NATARAJAN, Revathi, 94041 Mountain View (US)
(74) Representative: Keltie LLP

(57) **Abstract**

There is method for performing element-wise operations between input operands of a first array and a second array. The method comprises: sorting exponents of the input operands by range into a plurality of exponent ranges; sorting a first subset of the input operands from the first array into a first plurality of groups each having a respective exponent range; and sorting a second subset of the input operands from the second array into a second plurality of groups each having the respective exponent range. The method further comprises normalizing operands from each group of the first plurality of groups and the second plurality of groups to be within a corresponding exponent range to generate first normalized operands in the first plurality of groups and second normalized operands in the second plurality of groups; executing (1004) element-wise operations on a corresponding subset of the first normalized operands and a corresponding subset of the second normalized operands to generate a respective intermediate result of a plurality of intermediate results for each group of the first plurality of groups and each group of the second plurality of groups; and executing (1005) an accumulation of the respective intermediate result with one or more previously obtained intermediate results of the plurality of intermediate results.

## Description

### CROSS REFERENCE TO RELATED APPLICATIONS

This application claims a benefit and priority under 35 U.S.C. § 119(e) to U.S. Provisional Patent Application Serial No. 63/134,941, filed on January 7, 2021, which is hereby incorporated by reference in its entirety.

### BACKGROUND

The present disclosure relates to digital circuits, and in particular, to systems and methods for numerical precision in digital multiplier circuitry.

Digital circuits process logical signals represented by zeros (0) and ones (1) (i.e., bits). A digital multiply-accumulator is an electronic circuit capable of receiving multiple digital input values, determining a product of the input values, and summing the results. Performing digital multiply-accumulate operations can raise a number of challenges. For example, data values being multiplied may be represented digitally in a number of different data types. However, including different multipliers to handle all the different data types a system may need to process would consume circuit area and increase complexity.

One particular application where digital multiplication of different data types is particularly useful is machine learning (aka artificial intelligence). Such applications may receive large volumes of data values in a multiply-accumulator. Accordingly, such systems require particularly fast, efficient, and/or accurate multiply-accumulators capable of handling multiple different data types to carry out various system functions.

### SUMMARY

Embodiments of the present disclosure pertain to digital multimodal multiplier systems and methods. In one embodiment, the present disclosure includes a circuit comprising a plurality of multimodal multiplier circuits, the multimodal multiplier circuits comprising one or more storage register circuits for storing digital bits corresponding to one or more first operands and one or more second operands. In a first mode, the one or more storage register circuits store one first operand and one second operand having a first data type. In a second mode, the one or more storage register circuits store a first plurality of operands and a second plurality of operands having a second data type. A plurality of multiplier circuits are configured to receive the one or more first operands and the one or more second operands. In the first mode, the one first operand and the one second operand are multiplied in one or more of the plurality of multiplier circuits. In the second mode, a first operand of the first plurality of operands is multiplied with a first operand of the second plurality of operands and a second operand of the first plurality of operands is multiplied with a second operand of the second plurality of operands in the plurality of multiplier circuits.

In one embodiment, the first operands are weights and the second operands are activation values.

In one embodiment, the one first operand and the one second operand having the first data type comprise floating point values, and the first and second plurality of operands having the second data type comprise integer values.

In one embodiment, at least one of the plurality of multiplier circuits are used to multiply operands in both the first mode and the second mode. In another embodiment, a number of multiplier circuits used to multiply operands in the first mode is the same as a number of multiplier circuits used to multiply operands in the second mode.

In one embodiment, the one first operand and the one second operand having the first data type comprise a greater number of bits than the first and second plurality of operands having the second data type.

In one embodiment, multiplier circuitry is used to multiply operand and another operand of a first format. One or more storage register circuits of the multiplier circuitry store digital bits corresponding to the operand of the first format and another operand of the first format. A decomposing circuit of the multiplier circuitry decomposes the operand into a first plurality of operands, and decomposes the other operand into a second plurality of operands. The multiplier circuitry further includes a plurality of multiplier circuits. Each multiplier circuit multiplies a respective first operand of the first plurality of operands with a respective second operand of the second plurality of operands to generate a corresponding partial result of a plurality of partial results. An accumulator coupled to the plurality of multiplier circuits accumulates the plurality of partial results using a second format to generate a complete result of the second format that is stored in the accumulator circuit. A conversion circuit converts the complete result of the second format into an output result of an output format.

In another embodiment, a method for an integer multiplication is presented herein. The method comprises: storing digital bits corresponding to an operand of a first format and another operand of the first format, decomposing the operand and the other operand into a plurality of operands, multiplying a respective first operand of a first subset of the operands with a respective second operand of a second subset of the operands to generate a corresponding partial result of a plurality of partial results, and generating a complete result of a second format by accumulating the plurality of partial results in an accumulator circuit using the second format.

In some embodiments, methods for performing element-wise operations between input operands of a first array and a second array are presented herein. At least one of the methods comprises: sorting exponents of the input operands by range into a plurality of exponent ranges, sorting a first subset of the input operands from the first array into a first plurality of groups each having a respective exponent range, sorting a second subset of the input operands from the second array into a second plurality of groups each having the respective exponent range, normalizing operands from each group of the first and second plurality of groups to be within a corresponding exponent range to generate first normalized operands in the first groups and second normalized operands in the second groups, executing element-wise operations on a corresponding subset of the first normalized operands and a corresponding subset of the second normalized operands to generate a respective intermediate result of a plurality of intermediate results for each group of the first plurality of groups and each group of the second plurality of groups, and executing an accumulation of the respective intermediate result with one or more previously obtained intermediate results of the plurality of intermediate results.

In some embodiments, the techniques described herein are incorporated in a hardware description language program, the hardware description language program comprising sets of instructions, which when executed produce a digital circuit. The hardware description language program may be stored on a non-transitory computer-readable storage medium, such as a computer memory (e.g., a data storage system).

In some other embodiments, the operations of methods described herein are executed by a processor in accordance with sets of instructions stored at a non-transitory computer-readable storage medium, such as a computer memory (e.g., a data storage system).

The following detailed description and accompanying drawings provide a better understanding of the nature and advantages of the present disclosure.

### BRIEF DESCRIPTION OF THE DRAWINGS

Figure (FIG.) 1 illustrates a computer system based on a tensor streaming processor (TSP) device according to one or more embodiments.
FIG. 2A illustrates a multimodal multiplier circuit according to one embodiment.
FIG. 2B illustrates a multimodal multiplier circuit according to another embodiment.
FIG. 2C illustrates a multimodal multiplier circuit according to yet another embodiment.
FIG. 3 illustrates an example multimodal multiplier circuit according to one embodiment.
FIG. 4 illustrates another example multimodal multiplier circuit according to one embodiment.
FIG. 5 illustrates a multimodal multiply-accumulator circuit according to another embodiment.
FIG. 6 illustrates a method for the multimodal multiplication according to an embodiment.
FIG. 7 illustrates multiplier circuity with TruePoint^{™} (TP) format based accumulation of partial multiplication results according to an embodiment.
FIG. 8 is a graph illustrating improved precision of the TP based computations for a machine-learning workload.
FIG. 9 illustrates a method for integer multiplication with the TP based accumulation according to an embodiment.
FIG. 10 illustrates a method for conversion of floating point numbers during element-wise matrix operations according to an embodiment.
FIG. 11 illustrates a computing machine for use in commerce according to an embodiment.

### DETAILED DESCRIPTION

In the following description, for purposes of explanation, numerous examples and specific details are set forth in order to provide a thorough understanding of the present disclosure. Such examples and details are not to be construed as unduly limiting the elements of the claims or the claimed subject matter as a whole. It will be evident to one skilled in the art, based on the language of the different claims, that the claimed subject matter may include some or all of the features in these examples, alone or in combination, and may further include equivalent modifications of the features and techniques described herein.

Numerical precision is necessary for many artificial intelligence (AI) and machine learning (ML) applications. However, because errors accumulate when addends are smaller than the range supported by the significand, numerical precision is often sacrificed. Although approaches to minimize error accumulation are known, for example, using a higher precision format such as floating-point 32-bit (FP32) to accumulate floating-point 16-bit (FP16) addends, such approaches require a large number of FP32 significand bits (e.g., 23 bits). Integer accumulation is loss-less, but requires large registers, and may slow calculations.

The present disclosure describes a computing system that provides numerical precision equivalent to or better than FP32 numerical representation using integer formatted operands, e.g., 8-bit (INT8) or 4-bit (INT4) integer format operands. In one or more embodiments, the computing system presented herein converts operands from a floating point format to an integer format and implements a Toom-Cook decomposition algorithm to perform a plurality of integer multiplications to generate a plurality of partial multiplication results. The partial multiplication results are then shifted so that they are aligned with an appropriate power (i.e., 1, 10, 100). After that, the partial multiplication results are accumulated in one or more accumulation registers using the TruePoint^{™} (TP) numerical precision (i.e., fixed point format representation). A final multiplication result is obtained by rounding (i.e., truncating) the accumulated result to a desired numerical precision (e.g., FP32 numerical representation).

In accordance with embodiments of the present disclosure, a tensor streaming processor (TSP) may be utilized as a core processor module of the computer system presented herein. The TSP is particularly suited for computations in AI and ML applications. The TSP is a device that is commercially available from Groq, Inc. of Mountain View, California. For use in commerce, the Groq TSP Node^{™} Accelerator Card is available as a x16 PCI-Express (PCIe) 2-slot expansion card that hosts a single Groq Chip1^{™} device.

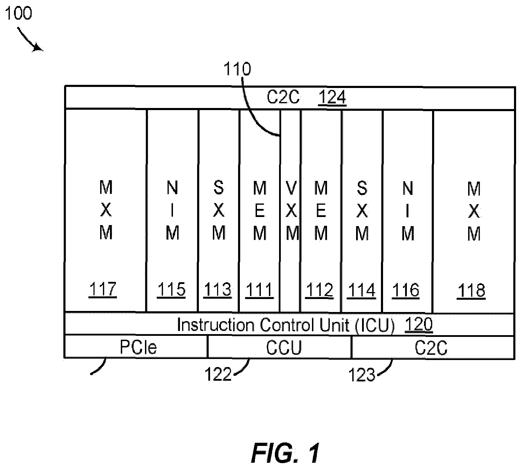

Referring now to FIG. 1, it illustrates an example TSP core 100 according to one example embodiment. The TSP core 100 (aka, AI processor and/or ML processor) includes memory and arithmetic modules optimized for multiplying and adding input data with weight sets (e.g., trained or being trained) for AI and/or ML applications (e.g., training or inference). As shown in FIG. 1, the TSP core 100 includes a vector processor (VXM) 110 for performing operations on vectors (i.e., one-dimensional arrays of values). Other elements of the TSP core 100 are arranged symmetrically on either side of the VXM 110 to optimize processing speed. As illustrated in FIG. 1, the VXM 110 is directly adjacent to memory modules (MEMs) 111, 112. Switch matrix units (SXMs) 113 and 114 are further arranged on both sides of the VXM 110 to control routing of data. The TSP core 100 further includes numerical interpretation modules (NIMs) 115 and 116 for numeric conversion operations, and matrix multiplication units (MXMs) 117 and 118 for matrix multiplications. An instruction control unit (ICU) 120 controls the flow of data and execution of operations across all functional blocks 110-118. The TSP core 100 may further include communications circuits such as chip-to-chip (C2C) circuits 123, 124, and an external communication circuit (e.g., PCIe) 121. The TSP core 100 may further include a chip control unit (CCU) 122 to control, e.g., boot operations, clock resets, some other low-level setup operations, or some combination thereof.

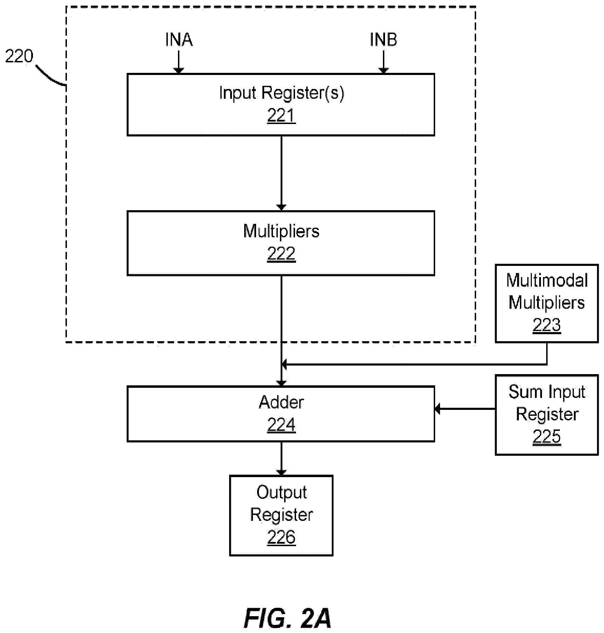

FIG. 2A illustrates a multimodal multiplier circuit according to one embodiment. The multimodal multiplier circuit of FIG. 2A may be a building block of the VXM 110, the MXM 117 and/or the MXM 118 of FIG. 1. Features and advantages of the present disclosure include multimodal multiplier circuits that may receive and process different data types with different numbers of bits in different modes and share circuitry, which may advantageously reduce circuit area and may improve the speed and efficiency of processing data, for example. For instance, a multimodal multiplier circuit 220 may include one or more input storage register circuits 221 for storing digital bits representing input operands to be multiplied. The storage register circuits 221 may store different numbers of operands to be multiplied together in different modes, and the operands may have different data types and different numbers of bits. Storage register circuits are circuits that store digital bits, such as a plurality of flip flops or other digital storage circuits known to those skilled in the art. A single storage register circuit may be partitioned into multiple storage register circuits, for example, to store different digital values (e.g., operands). In one embodiment, in a first mode, the one or more storage register circuits 221 store one first operand and one second operand having a first data type, and in a second mode the one or more storage register circuits store a first plurality of operands and a second plurality of operands having a second data type. A plurality of multiplier circuits 222 may be configured to receive the one or more first operands and the one or more second operands, for example. As illustrated in various embodiments disclosed herein, multipliers may be shared across modes. For example, in a first mode, two operands having the first data type are multiplied in one or more of the plurality of multiplier circuits 222. In a second mode, a first plurality of operands and a second plurality of operands are multiplied in the plurality of multiplier circuits 222. The first and second plurality of operands multiplied in the second mode may have fewer bits than the first and second operands multiplied in the first mode, for example. However, one or more of the multiplier circuits may be used for both modes. For example, in one embodiment, at least one of the plurality of multiplier circuits is used to multiply operands in both the first mode and the second mode. In another embodiment, a number of multiplier circuits used to multiply operands in the first mode is the same as the number of multiplier circuits used to multiply operands in the second mode.

As further illustrated in FIG. 2A, in some embodiments, multimodal multiplier circuits 220 may be combined to form multimodal multiply-accumulator circuits. For example, an output of multimodal circuit 220 may comprise output product values having different data types or even different numbers of output products in different modes, for example. Output products of a plurality of other multimodal multipliers 223 may be summed with output products of multimodal multiplier 220 in adder 224 to produce a multimodal multiply-accumulator. Additionally, in other embodiments disclosed herein, an input register 225 may receive an input value (e.g., an output of another multiply-accumulator) and adder 224 may sum locally generated products with sums generated by other multimodal multiply accumulators, for example. An output register may store a summed result and may couple the result to additional multiply-accumulator circuits, for example. Arrays of such multimodal multiply-accumulate circuits may be configured to process large volumes of operands having different data types, for example. Embodiments of the disclosure may be particularly advantageous in machine learning (aka artificial intelligence) digital processing circuit applications, where the one or more first operands are weights and the one or more second operands are activation values, for example.

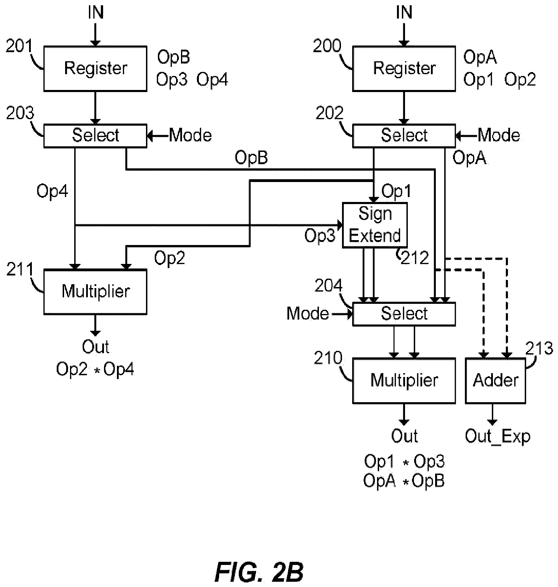

FIG. 2B illustrates a multimodal multiplier circuit according to another embodiment. The multimodal multiplier circuit of FIG. 2B may be a building block of the VXM 110, the MXM 117 and/or the MXM 118 of FIG. 1. In this example, storage register circuit 200 may store digital bits corresponding to one or more first operands. Similarly, a second storage register circuit 201 may store digital bits corresponding to one or more second operands. As mentioned above, registers 200 and 201 may be one partitioned register or multiple distinct registers, for example. In a first mode, the first and second storage register circuits 200 and 201 each may store one first operand and one second operand having a first data type (e.g., OpA and OpB, respectively), and in a second mode the first storage register circuit 200 stores a first plurality of operands (e.g., Op1 and Op2) and the second storage register circuit 201 stores a second plurality of operands (e.g., Op3 and Op4) having a second data type. In one embodiment, operands having the first data type may comprise a greater number of bits than operands having the second data type, for example. In one embodiment, operands having the first data type comprise floating point values, for example, and operands having the second data type comprise integer values, for example.

Referring again to FIG. 2A, first and second multiplier circuits 210 and 211 are coupled to the first and second storage register circuits 200 and 201. In a first mode, one first operand (e.g., OpA) in the first storage register circuit 200 and one second operand (e.g., OpB) in the second storage register circuit 201 are coupled to the first multiplier circuit 210. In a second mode, a first operand of the first plurality of operands (e.g., Op1 of Op1 and Op2) in the first storage register circuit 200 and a first operand of the second plurality of operands (e.g., Op3 of Op3 and Op4) in the second storage register circuit 201 are coupled to the first multiplier circuit 210 and a second operand of the first plurality of operands (e.g., Op2 of Op1 and Op2) in the first storage register circuit 200 and a second operand of the second plurality of operands (e.g., Op4 of Op3 and Op4) in the second storage register circuit 201 are coupled to the second multiplier circuit 211. In this example, select circuits (e.g., multiplexers) 202 and 203 may be used to selectively couple operands from input storage registers to particular multipliers based on a mode control signal. For example, in a first mode, select circuit 202 may couple OpA from register 200 to one input of multiplier 210, and select circuit 203 may couple OpB from register 201 to another input of multiplier 210. In a second mode, registers 200 and 201 may each receive and store two operands on each multiplication processing cycle. Accordingly, in the second mode, select circuit 202 couples Op1 to one input of multiplier 210 and couples Op2 to one input of multiplier 211. Similarly, in the second mode, select circuit 203 couples Op3 to another input of multiplier 210 and couples Op4 to another input of multiplier 211. Accordingly, in some modes, data may be multiplied in parallel and multipliers may be shared across multiple modes, for example.

As mentioned above, operands having the first data type (e.g., floating point values) may have a greater number of bits than operands having the second data type (e.g., integers). Accordingly, multiplier circuit 210 may be configured to multiply inputs having a greater number of bits than multiplier circuit 211, for example. In this example, operands having the second data type entering multiplier 210 may be sign extended to match the extended bit capabilities of multiplier circuit 210. For instance, the multimodal multiplier circuits may further comprise a sign extension circuit 212 coupled to outputs of the first and second storage register circuits 200 and 201 to receive, in the second mode, one of the first plurality of operands (e.g., Op1) from the first storage register circuit 200 and one of the second plurality of operands (e.g., Op3) from the second storage register circuit 201, for example. Sign extension circuit 212 may increase the number of bits of each binary number (e.g., Op1 and Op3) while preserving the number's sign (positive/negative) and value, for example. Another select circuit 204 receives the mode control signal to couple inputs of multiplier 210 to either outputs of the sign extension circuit 212 to receive operands of the second data type, or alternatively, to outputs of select circuits 202 and 203 to receive operands of the first data type.

As mentioned above, in some applications operands coupled to input registers 200 and 201 may be floating point numbers. Accordingly, a multimodal multiplier circuit may further comprise an adder circuit 213. In one mode, exponent bits of one operand (e.g., a floating point operand) in storage register circuit 200 and exponent bits in a second operand (e.g., another floating point operand) in storage register circuit 201 are coupled to adder circuit 213 (designated as dashed lines for when floating point is used). Floating point values may have the form "significand × base^{exponent}," where the exponent of two FP operands may be added in adder 213 and significands (aka the mantissa) of the FP operands are multiplied in multiplier 210, for example. Floating point numbers may be represented in the system using more bits than integers, for example, and thus multiplier 210 may have more bits than multiplier 211, which may only multiply operands having the second data type, for example. As described in more detail below, outputs of multipliers 210 and 211 and adder 213 may be further processed and added to other multiplier outputs.

One example application of the techniques described herein is in machine learning processors (aka artificial intelligence processors, e.g., neural networks). Such processors may require volumes of multiply-accumulate functions, and it may be desirable in many applications to flexibly process input data represent in a variety of different data types, such as signed integer, unsigned integer, or floating point (e.g., FP16 IEEE 754). Accordingly, in one embodiment, the first operands are weights and the second operands are activation values and the circuits and methods described herein are implemented in a machine learning processor. For example, one mode may configure a machine learning processor to multiply floating point (FP) numbers. Accordingly, a first FP operand corresponding to a weight may be stored in register 200 and a second FP operand corresponding to an activation (e.g., a pixel value of an input image) may be stored in register 201. In the example shown in FIG. 2B, the significand of the first and second FP operands are coupled to a wide bit format multiplier 210, for example, and the exponent bits of the FP operands are coupled to adder 213 to produce an output product (e.g., OpA*OpB × exp^{out_exp}). In a second mode, the machine learning processor may multiply integer numbers. In the second mode, two 8-bit integers, for example, may be stored in each of registers 200 and 201. More specifically, two integer weights may be stored in register 200 and two integer activations may be stored in register 201. One activation and one weight may be coupled to a sign extend circuit so the integers match the wider format of multiplier 210, for example, and another activation and weight are coupled to multiplier 211 to be advantageously multiplied in parallel. Outputs of multipliers 210 and 211 (e.g., Op1*Op3 and Op2*Op4) may be further combined together, for example, and with other multiplier outputs as described in more detail below. Activations and weights may alternatively multiplied together using the techniques illustrated FIG. 2B, for example.

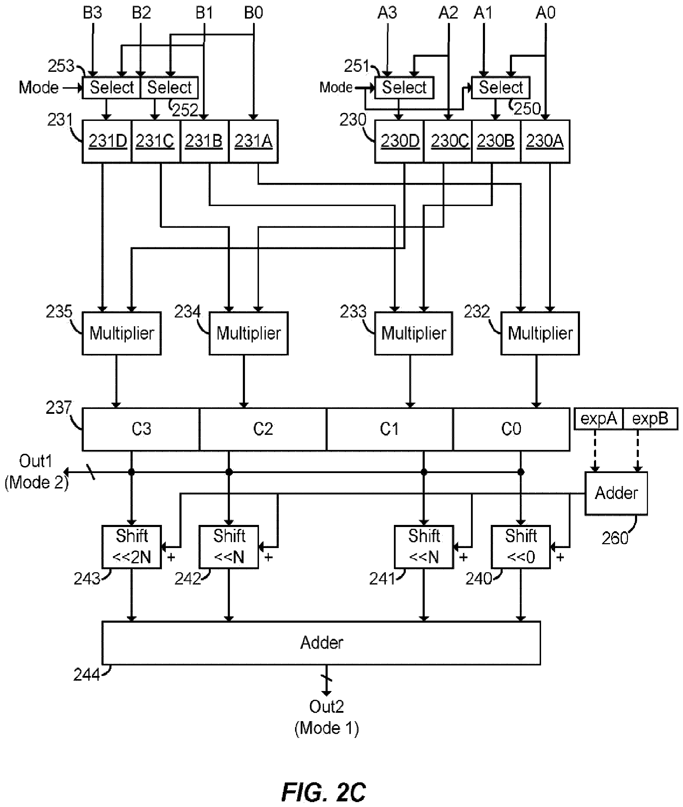

FIG. 2C illustrates a multimodal multiplier circuit according to yet another embodiment. The multimodal multiplier circuit of FIG. 2C may be a building block of the VXM 110, the MXM 117 and/or the MXM 118 of FIG. 1. In this example, one or more operands, A, may be received in a first storage register circuit 230 and one or more second operands, B, may be received in a second storage register circuit 231. A plurality of multipliers 232-235 are coupled to particular segments of registers 230 and 231 to receive the one or more operands. In this example, different operands, or components of each operand, may be positioned in different locations in registers 230 and 231 based on the mode so that multipliers 232-235 may be efficiently shared. For example, in one mode A and B both correspond to four (4) operands A0-A3 and B0-B3 (e.g., a total of eight 8-bit integers). Accordingly, operands A0-A3 are stored in register segments 230A-D, respectively, and operands B0-B3 are stored in register segments 231A-D, respectively. Multiplier 232 has one input coupled to segment 230A of register 230 and a second input coupled to segment 231A of register 231 to receive operands A0 and B0. Similarly, multiplier 233 has one input coupled to segment 230B and a second input coupled to segment 231B to receive operands A1 and B1, multiplier 234 has one input coupled to segment 230C and a second input coupled to segment 231C to receive operands A2 and B2, and multiplier 235 has one input coupled to segment 230D and a second input coupled to segment 231D to receive operands A3 and B3. Accordingly, in one mode, multipliers 232-235 may multiply two sets of four 8-bit integer operands. The output product values of multipliers 232-135, C0=A0B0, C1=A1B1, C2=A2B2, and C3=A3B3, may be stored in register 237, which may provide a first output (Out1) in one of the modes, for example. C0-C3 may be concatenated and added to output products of other multimodal multiplier circuits as described below.

In another mode, the circuit may receive operands A and B having a different data type with a greater number of bits. For example, operands A and B may be a 1 6-bit floating point numbers. Accordingly, these operands may be stored as components in different register segments of registers 230-231. For example, one operand A may be stored as two components in two register segments in register 230, and another operand B may be stored as two components in two register segments in register 231. In one embodiment, operand A comprises a first component (e.g., lower order bits) received on AC and stored in register segment 230A and a second component (e.g., higher order bits) received on A2 and stored in register segment 230C. Operand B comprises a first component (e.g., lower order bits) received on B0 and stored in register segment 231A and a second component (e.g., higher order bits) received on B1 and stored in register segment 231B, for example. Embodiments of the present disclosure may selectively couple different input bits into different register segments in different modes. For example, in this mode, the first component of A on input A0 may be coupled to and stored in register segment 230B, and the second component of A on input A2 may be coupled to and stored in register segment 230D. Similarly, the first component of B on input B0 may be coupled to and stored in register segment 230C, and the second component of B on input B1 may be coupled to and stored in register segment 231D. The selective arrangement of inputs in different register segments for different modes is illustrated in FIG. 2C using select circuits (e.g., multiplexers) 250-253. Accordingly, in this mode, multiplier 232 receives the first component (on A0) of operand A and the first component (on B0) of operand B, multiplier 233 receives the first component (on A0) of operand A and the second component (on B1) of operand B, multiplier 234 receives the second component (on A2) of operand A and the first component (on B0) of operand B, multiplier 235 receives the second component (on A2) of operand A and the second component (on B1) of operand B. In other words multipliers 232-235 perform the following multiplications A0B0, A0B1, A2B0, and A2B1, where A0 are the lower order (less significant) bits of A, A2 are the higher order (more significant) bits of A, B0 are the lower order (less significant) bits of B, and B1 are the higher order (more significant) bits of B.

Output product values C0-C3 of components of the inputs may be stored in register 237, for example. In this mode, outputs of multipliers 232-235 may be coupled to shift circuits 240-243. Outputs of shift circuits 240-243 are coupled to an adder circuit to produce an output product of the inputs A*B. For example, C0 may be coupled to shift circuit 240, which may have a nominal shift value of 0, C1 may be coupled to shift circuit 241, which may have a nominal shift value of N (where N is the number of bits of the input component - e.g., N=8 for an 8 bit component into each multiplier), C2 may be coupled to shift circuit 242, which may have a nominal shift value of N, and C3 may be coupled to shift circuit 243, which may have a nominal shift value of 2N. Each shift circuit may perform a left shift, for example. Accordingly, in this example, products of lower order bits A0B0 are not shifted, products of higher and lower order bits A2B0 and B1A0 are shifted by N. and products of higher order bits A2B1 are shifted by 2N. From the above it can be seen that in some embodiments no shifter 240 may be included since C0 may not be shifted. However, in one embodiment, exponent bits of floating point operands, expA and expB, may be input to adder circuit 260 and added together and the result used to increase the shift performed by each shift circuit. For example, an output of adder circuit 260 is coupled to a control input of each shift circuit 240-243 so that the sum of exponent bits expA and expB may increase the shift of each shift circuit (e.g., expA=1; expB=2; increase each shift by 3). The outputs of the shift circuits are summed in an adder circuit 244, which may comprise a plurality of N-bit adders, for example. The shifted and added output product values may provide a second output (Out2) in one of the modes, which may be a fixed point representation, for example. Accordingly, in some embodiments, multiplication of the inputs may result in output products being converted to a third data type, which may be added to output products of other multimodal multiplier circuits as described below.

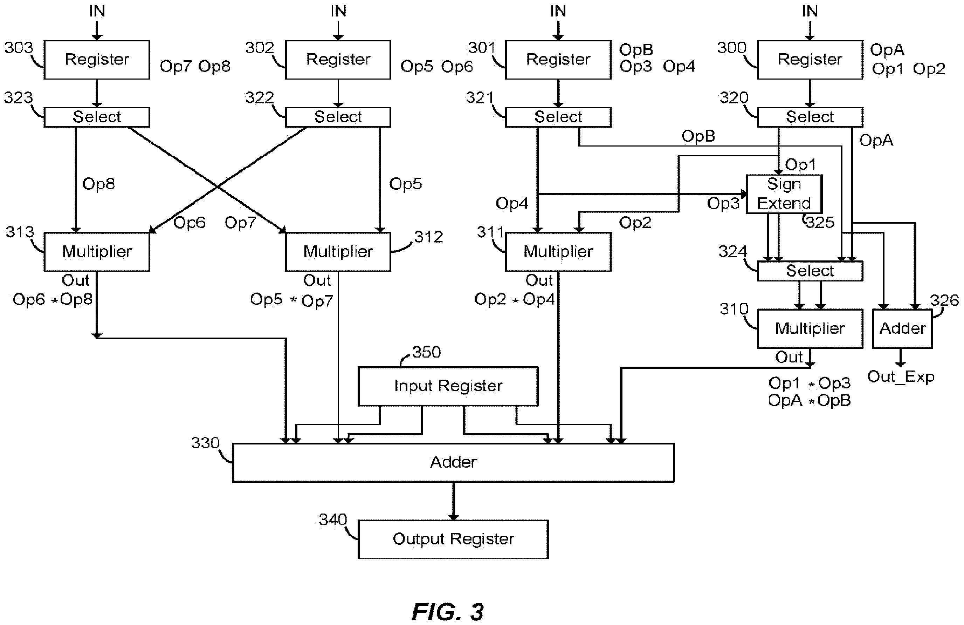

FIG. 3 illustrates a multimodal multiplier circuit according to another embodiment. The multimodal multiplier circuit of FIG. 3 may be a building block of the VXM 110, the MXM 117 and/or the MXM 118 of FIG. 1. Some embodiments of the present disclosure may receive and process operands in one mode with high precision, including bit lengths long enough such that, when in another mode, multiple lower bit length operands may be processed in a plurality of parallel multipliers. In this example, registers 300-301 and multiplier 310 may process operands in a first data type (e.g., a float) in one mode, and a difference in bit representations in the system may allow processing of N (where N is an integer, e.g., N=4) operands having a second data type (e.g., integer) in another mode. Multiplier 310 may process one operand from each register 300-301 in a first mode, and multipliers 310 and 311 may combine two operands from each register 300-301 in a second mode. Additionally, the multimodal multiplier circuit shown in FIG. 3 may further comprise a third storage register circuit 302 for storing digital bits corresponding to a two additional operands (Op5, Op6) and a fourth storage register circuit 303 for storing digital bits corresponding to two more operands (Op7, Op8), where Op5-Op8 have the second data type with fewer bits than the first data type (e.g., INT8 v. FP16). In one embodiment, register 302 stores weight values and register 303 stores activation values.

The circuit in FIG. 3 may further include multipliers 312 and 313. Select circuits 322 and 323 couple operands in registers 302 and 303 to multiplier circuits 312 and 313. For example, multiplier circuit 312 may be coupled to storage register circuits 302 and 303 to receive an operand (e.g., Op5) from storage register circuit 302 and another operand (e.g., Op7) from storage register circuit 303. Similarly, multiplier circuit 313 may be coupled to storage register circuits 302 and 303 to receive an operand (e.g., Op6) from storage register circuit 302 and another operand (e.g., Op8) from storage register circuit 303. In a machine learning application, Ops5-6 are weights and Ops7-8 are activation values. Accordingly, the output of each multiplier is an activation multiplied by a weight. Advantageously, in the second mode, four multiplications may be performed in parallel. In the second mode, the outputs of each multiplier 310-313 may be coupled to an adder 330, which may sum (or accumulate) products, for example. The final output may be stored in an output register. In one embodiment, the outputs products from multipliers 310-313 are added to corresponding values in an input register 350, for example. As described further below, some embodiments may accumulate products of activations and weights (x*wt) along a column of multipliers (not shown), for example. Accordingly, in this example, input register 350 may store four (4) values of the integers (A1, A2, A3, A4), which are added to the four corresponding output products from multipliers 310-313 (R1, R2, R3, R4). The result is four (4) corresponding output values in output register 340 (A1+R1, A2+R2, A3+R3, A4+R4), which may be coupled to an input register of another group of multipliers, for example.

As described in more detail below, some embodiments of multiplier 310 may, in the first mode, produce floating point values, which are then converted to a third data type, such as fixed point, having an extended bit length to achieve wide dynamic range and accuracy. In one embodiment, a fixed point value may comprise a number of bits equal to at least N (e.g., N=4) times the number of bits produced by products of operands (e.g., Op4*Op2, Op5*Op7, Op6*Op8) having the second data type (e.g., 8-bit integer). Accordingly, the same adder 330 and output register 340 may be used to store one extended length data type or multiple integer data types, for example, which may have advantages including reduced circuit area, for example.

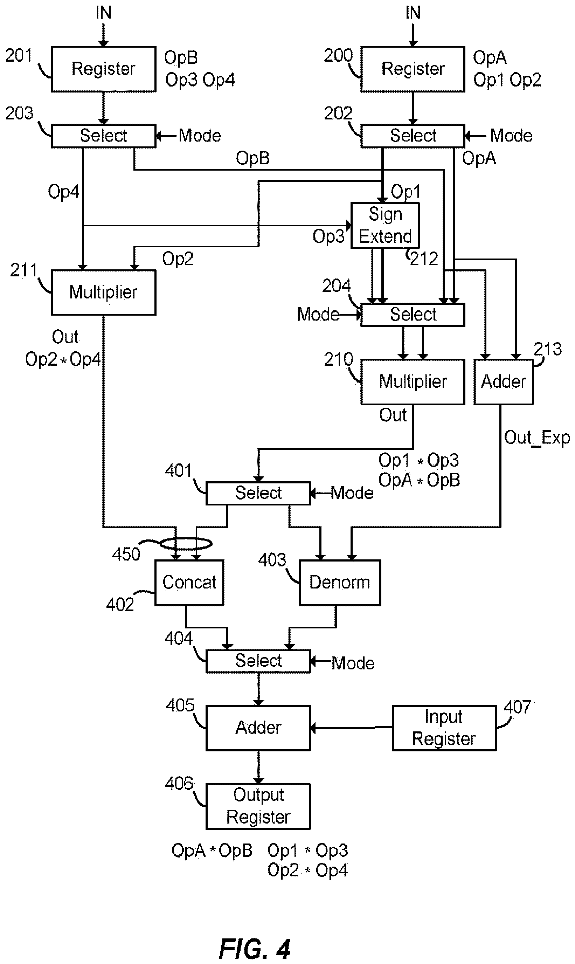

FIG. 4 illustrates a multimodal multiplier circuit according to yet another embodiment. The multimodal multiplier circuit of FIG. 4 may be a building block of the VXM 110, the MXM 117 and/or the MXM 118 of FIG. 1. In this example, the output of multiplier 210 is coupled to a select circuit 401. In a first mode, the output product of multiplier 210 and summed exponents from adder 213 may be coupled to a denormalizer circuit 403. For instance, in the first mode, the denormalizer circuit 403 may receive a floating point product from multiplier circuit 210 and summed exponent bits from adder circuit 213 and produce a fixed point value. A fixed point value may be used to advantageously optimize dynamic range and precision, for example. In one embodiment, the fixed point value comprises a number of bits equal to at least N times the number of bits produced by products of operands having the second data type. Accordingly, registers and adders may be configured to process one extended length fixed point number in a first mode and N (e.g., N=4 as illustrated in FIG. 3) output product results for a second data type in a second mode. For example, in one implementation, the fixed point representation of the number, in the first mode, may have an extended bit length (e.g., 90-100 bits). In a second mode, a first output product of multiplier 210 has a first bit length greater than the other multipliers (e.g., multiplier 211 or multipliers 311-313, as mentioned above). Accordingly, one or more of the output products of the multipliers may be sign extended (e.g., at 450), in the second mode, so that the bit length of the output products are the same. The final bit length of the output products of the plurality of multipliers, in the second mode, may be substantially the same as the bit length of the fixed point number from denormalizer circuit 403 in the first mode, for example.

In this example, equalizing the number of bits between first and second modes may include concatenating the multiplier outputs, for example, using concatenation circuit 402. Accordingly, in the second mode, select circuit 401 couples the output of multiplier 210 to one input of concatenation circuit 402, and other inputs of concatenation circuit 402 may be coupled to outputs of other multiplier circuits, such as multiplier circuit 211 as shown in FIG. 4, for example. Additionally, in some embodiments, additional padding bits may be added between the concatenated values in the second mode to isolate the individual values during the addition described below, for example.

As illustrated in FIG. 3, other example embodiments may be extended to include more parallel multiplication paths for additional operands having a second data type and received during a second mode. For example, four (4) multiplications of Int8 values may be multiplied together, concatenated, added, and stored in output register 406, for example.

Referring again to FIG. 4, outputs of concatenation circuit 402 and denormalizer circuit 403, which may have substantially the same number of bits, are selectively coupled to adder 405. Adder 405 may also be configured to receive digital values from an input register 407, for example, which may be a value produced using one or more other multimodal multiplier units. In a first mode, input register 407 includes an extended length fixed point number, and in a second mode, input register 407 may include the same number of values as received by concatenation circuit 402 (e.g., 4 8-bit integers). Accordingly, adder 405 may receive and sum two or more fixed point numbers, in a first mode, or multiple arrays of values in a second format (e.g., two or more 4 integer arrays) in a second mode. The results are stored in output register 406. In the example in FIG. 4, output register 406 may store either one fixed point number or two integers, for example.

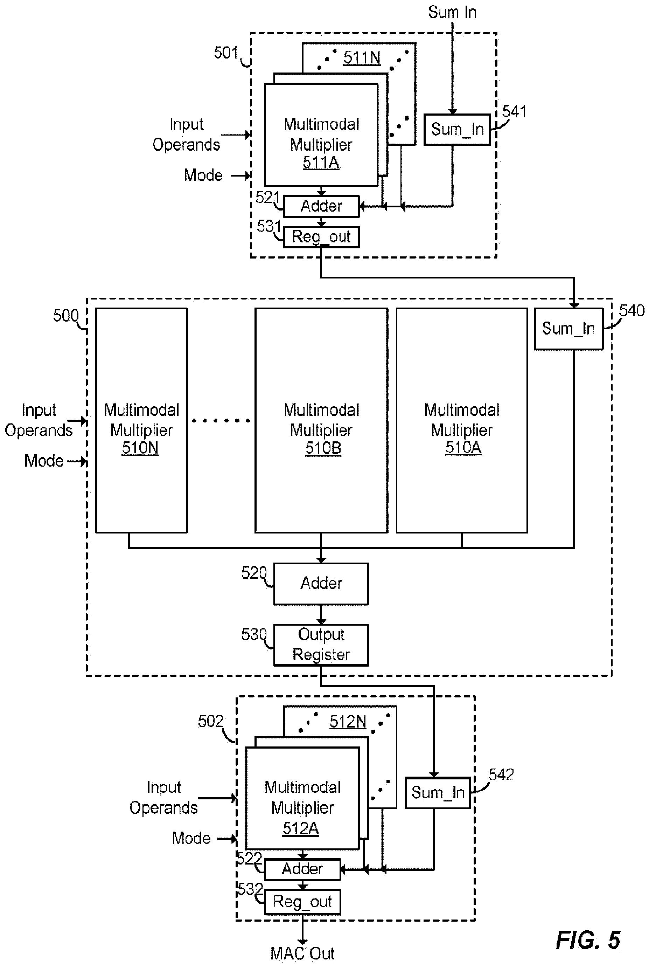

FIG. 5 illustrates a multimodal multiply-accumulator circuit according to another embodiment. The multimodal multiply-accumulator circuit of FIG. 5 may be a building block of the VXM 110, the MXM 117 and/or the MXM 118 of FIG. 1. In this example, a plurality of multimodal multipliers are configured in parallel, and outputs of the multipliers are coupled to inputs of an adder circuit to form a multiply-accumulator. Additionally, groups of multiply-accumulator circuits may be configured in series. For instance, multimodal multiplier circuits 510A-N may receive input operands in a first or second data type and a mode control signal ("mode") to configure the multiplier circuits to process different types of inputs. Each multimodal multiplier 510A-N may receive a pair of operands having the first data type (e.g., FP16) in a first mode. Alternatively, each multimodal multiplier 510A-N may receive a plurality of pairs of operands having the second data type (e.g., INT8) in a second mode. The pairs of operands may be activation values and weights of a neural network, for example, where the circuit in FIG. 5 may be included in a machine learning digital data processing circuit.

The outputs of each multimodal multiplier 51 0A-N may be coupled to adder 520, which may (in some embodiments) correspond to adder 330 in FIG. 3 or adder 405 in FIG. 4, for example. In the first mode, adder 520 sums values having a third data type (e.g., fixed point), where each multimodal multiplier 510A-N converts a product of the input operands from the first data type (e.g., float) to the third data type (e.g., extended length fixed point) as mentioned above. In a second mode, adder 520 sums values having the second data type (e.g., integer). In one embodiment, product values from a particular multiplier in each multimodal multiplier 510A-N are added to product values from corresponding multipliers. For example, referring to FIG. 3, the product from multiplier 310 in one multimodal multiplier 510A is added to the products from multiplier 310 in the other multimodal multipliers 510B-N, and the product from multiplier 311 in one multimodal multiplier 510A is added to the products from multiplier 311 in the other multimodal multipliers 510B-N, and so on. Accordingly, results from columns of multipliers in an array of multiplier circuits may be combined independently (e.g., as arrays of values). Outputs of adder 520 are stored in output register circuit 530, which stores a single output value in the third data type, for example, in the first mode and multiple output values having the second data type in the second mode, for example.

In some embodiments, each multiply-accumulator circuit 500-502 may comprise an input register circuit having an input coupled to an output register circuit of another multimodal multiply-accumulator circuit. For example, multiply accumulator circuit 500 includes an input register 540, which may be configured to receive one or more sums from multiply-accumulator 501 based on the mode the system is operating in, for example, Accordingly, when multiply-accumulator circuits 500 and 501 are in a first mode, input register 540 receives and stores a single input value, which may have the third data type (e.g., an extended fixed point value), and when multiply-accumulator circuits 500 and 501 are in a second mode, input register 540 receives and stores a plurality of input values having the second data type (e.g., four (4) integer values).

An output of register 540 is coupled to the adder circuit 520. Accordingly, in the first mode, a plurality of values, one from each multimodal multiplier 5 10A-N, may be added together and further added to the single input value in register 540. Alternatively, in the second mode, multiple values from each multimodal multiplier 510A-N and the multiple values from input register 540 are added, where values corresponding to particular columns are added to other values corresponding to particular columns. For example, if there are four values in input register 540 and four multipliers used in each multimodal multiplier 510A-N in the second mode, then a first of the four values from register 540 may be added with values from N multipliers 310 (See FIG. 3) in each of 510A-N, a second of the four values from register 540 may be added with values from multipliers 311 (in FIG. 3) in each of 510A-N, and so on, which may result in four summed output values in output register 530. An output of the output register circuit 530 is coupled to multimodal multiply-accumulator circuit 502 and a similar process may be repeated, for example.

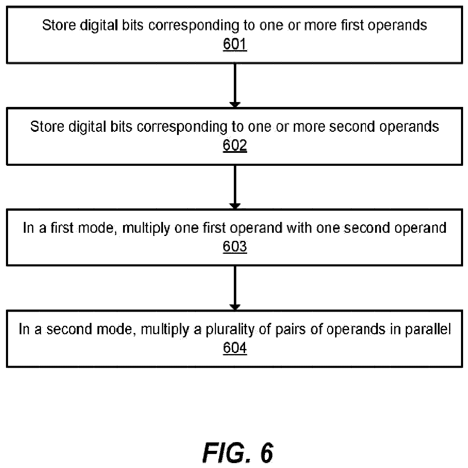

FIG. 6 illustrates a method for the multimodal multiplication according to an embodiment. At 601, digital bits corresponding to one or more first operands are stored in a first storage register circuit. At 602, digital bits corresponding to one or more second operands are stored in a second storage register circuit. In a first mode, the first and second storage register circuits may store one first operand and one second operand having a first data type. In a second mode the first and second storage register circuits may store a first plurality of operands and a second plurality of operands having a second data type. At 603, in the first mode, the one first operand in the first storage register circuit and the one second operand in the second storage register circuit are multiplied in a first multiplier circuit coupled to the first and second storage register circuits. At 604, in a second mode, one of the plurality of first operands in the first storage register circuit and one of the plurality of second operands in the second storage register circuit are multiplied using the first multiplier circuit. Additionally, another one of the plurality of first operands in the first storage register circuit and another one of the plurality of second operands in the second storage register circuit are multiplied using the second multiplier circuit.

In some embodiments, a digital system, such as a computer system based on the TSP core 100, utilizes either a floating point format or an integer format to store representations of input operands in a compressed format while arithmetic calculations (e.g., multiplications and additions) can be performed in an integer format. The results of arithmetic operations are accumulated in one or more accumulate registers using the TP format, (i.e., fixed point numerical representation), and a final multiplication result is obtained by truncating the accumulation result to a desired precision (e.g., FP32). More specifically, the TP format is a fixed point numerical representation of an accumulation of FP16 products that avoids the need for higher precision calculations in the matrix multiplication loop. The TP format represents a fixed point numerical representation for the accumulation result having an accuracy comparable to a higher precision FP numerical representation (e.g., FP64 numerical precision). At an output of the MXM 117 and/or the MXM 118, a sum of products is converted from the TP format (i.e., the fixed point loss-less integer representation) to, e.g., FP32 numerical representation with only 23 bits of significand.

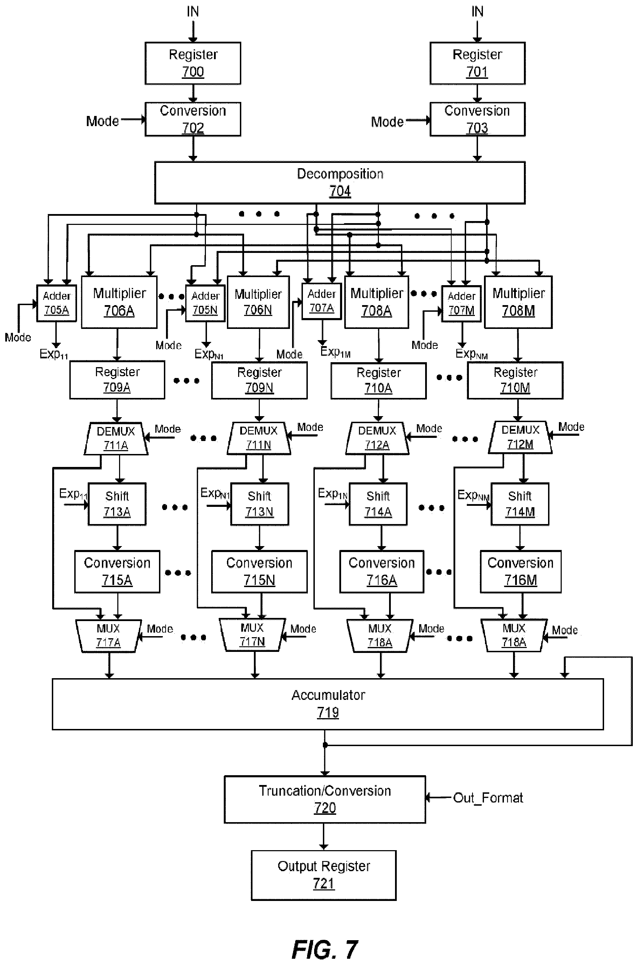

FIG. 7 illustrates multiplier circuity with the TP format based accumulation of partial multiplication results according to an embodiment. The multiplier circuity of FIG. 7 can be a building block of the VXM 110, the MXM 117 and/or the MXM 118. In some embodiments, the multiplier circuity of FIG. 7 is a component of an array of multipliers within, e.g., the MXM 117 and/or the MXM 118. One or more storage register circuits 700, 701 store digital bits corresponding to an operand of a first format and another operand of the first format. The first format may be an INT4 format, an INT8 format, an INT16 format, a FP16 format (e.g., in accordance with the IEEE 754 standard) and a FP32 format (e.g., in accordance with the IEEE 754 standard), or some other numerical representation format. Conversion circuits 702, 703 may convert the operand and the other operand from a floating point format into an integer format prior to decomposition of the operand and the other operand. The conversion circuits 702, 703 may be bypassed, e.g., based on a Mode signal, when the first format of the operand and the other operand is an integer format. The Mode signal is a bit signal having a first value (e.g., "0") when the first formal is an integer format (e.g., INT4, INT8, INT16) and having a second value (e.g., "1") when the first formal is a floating point format (e.g., FP16, FP32).

A decomposition circuit 704 decomposes the operand into a first plurality of operands (e.g., smaller integer numbers). The decomposition circuit 705 further decomposes the other operand into a second plurality of operands (e.g., smaller integer numbers). The decomposition circuit 704 may decompose the operand and the other operand by applying, e.g., a Toom-Cook decomposition algorithm. Details about the Toom-Cook decomposition algorithm are provided further below.

The first plurality of multipliers 706A, ..., 706N and the second plurality of multipliers 708A, ..., 708N are integer multipliers. When the first format is an integer format, each operand of the first plurality of operands is routed from the decomposition circuit 704 to each multiplier of a first plurality of multipliers 706A, ..., 706N as well as to each multiplier of a second plurality of multipliers 708A, ..., 708M. Similarly, each operand of the second plurality of operands is routed from the decomposition circuit 704 to each multiplier of the first plurality of multipliers 706A, ..., 706N as well as to each multiplier of the second plurality of multipliers 708A, ..., 708M. Each pair of operands from the first and second pluralities of operands are mutually multiplied in a corresponding multiplier of the first and second pluralities of multipliers 706A, ..., 706N, 708A, ..., 708M to generate a corresponding partial result of a plurality of partial results. The partial results generated by the multipliers 706A, ..., 706N, 708A, ..., 708M are stored in corresponding registers 709A, ... , 709N, 710A, ..., 710M.

When the first format is a floating point format, a significand portion from each operand of the first plurality of operands is routed from the decomposition circuit 704 to each multiplier of the first plurality of multipliers 706A, ..., 706N as well as to each multiplier of the second plurality of multipliers 708A, ..., 708M. Similarly, a significand portion from each operand of the second plurality of operands is routed from the decomposition circuit 704 to each multiplier of the first plurality of multipliers 706A, ..., 706N as well as to each multiplier of the second plurality of multipliers 708A, ..., 708M. Each pair of significand portions from the first and second pluralities of operands are mutually multiplied in a corresponding multiplier of the first and second pluralities of multipliers 706A, ..., 706N, 708A, ..., 708M to generate a corresponding partial result stored in a corresponding register 709A, ..., 709N, 710A, ..., 710M. Additionally, an exponent portion from each operand of the first plurality of operands is routed from the decomposition circuit 704 to each adder of a first plurality of adders 705A, ..., 705N as well as to each adder of a second plurality of adders 707A, ..., 707M. Similarly, an exponent portion from each operand of the second plurality of operands are routed from the decomposition circuit 704 to each adder of the first plurality of adders 705A, ..., 705N as well as to each adder of the second plurality of adders 707A, ..., 707M. Each pair of exponent portions from the first and second pluralities of operands are mutually summed in a corresponding adder of the first and second pluralities of adders 705A, ..., 705N, 707A, ..., 707M to generate a corresponding exponent Exp₁₁, ..., Exp_{N1}, Exp_{1M}, ..., Exp_{NM}. When the first format is a floating point format, the first and second pluralities of adders 705A, ..., 705N, 707A, ..., 707M are not utilized. In such case, the adders 705A, ..., 705N, 707A, ..., 707M can be turned off based on the Mode signal, all zero bits are routed to the inputs of the adders 705A, ..., 705N, 707A, ..., 707M, or the adders 705A, ..., 705N, 707A, ..., 707M are bypassed in some other manner and their outputs are not utilized.

When the first format is a floating point format, each partial result stored in the corresponding register 709A, ..., 709N, 710A, ..., 710M is shifted at a corresponding shift circuit 713A, ..., 713N, 714A, ..., 714N by a number of bits equal to a value of a respective exponent Exp₁₁, ..., Exp_{N1}, Exp_{1M}, ..., Exp_{NM} output from a corresponding adder 705A, ..., 705N, 707A, ..., 707M. Each shifted partial result is passed onto a corresponding conversion circuit 715A, ..., 715N, 716A, ..., 716M. Conversion circuits 715A, ..., 716N, 716A, ..., 716M convert the plurality of partial results to the TP format, i.e., to the fixed point numerical representation. A position of a decimal point in the TP numerical representation of each shifted partial result is based on a value of the respective exponent Expn, ..., Exp_{N1}, Exp_{1M}, ..., Exp_{NM}.

When the first format is an integer format, shifting and conversion are not required, i.e., the shift circuits 713A, ..., 713N, 714A, ..., 714N and the conversion circuits 715A, ..., 715N, 716A, ..., 716M are by passed using, e.g., corresponding demultiplexers 711A, ..., 711N, 712A, ..., 712M controlled by an appropriate value of the Mode signal. In such case, the partial results stored in the registers 709A, ..., 709N, 710A, ..., 710M are directly provided to an accumulator circuit 719, e.g., via corresponding multiplexers 717A, ... , 717N, 718A, ... , 718M controlled by an appropriate value of the Mode signal. When the first format is a floating point format. the shifted partial results at the outputs of the conversion circuits 715A, ..., 715N, 716A, ..., 716M are provided to the accumulator circuit 719, e.g., via corresponding multiplexers 717A, ..., 717N, 718A, ..., 718M controlled by an appropriate value of the Mode signal.

The accumulator circuit 719 accumulates the plurality of partial results (or the plurality of shifted partial results) using the second format (i.e., the TP numerical representation) to generate a complete result of the second format that is also stored in a register of the accumulator circuit 719. In a preferred embodiment, in order to minimize accumulation of an error, the accumulator circuit 719 accumulates the plurality of partial results from a smallest partial result among the plurality of partial results to a largest partial result among the plurality of partial results. Although FIG. 7 illustrates a single accumulator circuit 719, the multiplier circuity in FIG. 7 may comprise a plurality of accumulator circuits, e.g., connected into a single accumulation stage or multiple accumulation stages. In one embodiment, the accumulator circuit 719 comprises at least 80 bits. In another embodiment, the accumulator circuit 719 comprises 96 bits. In yet another embodiment, the accumulator circuit 719 comprises 128 bits. However, the accumulator circuit 719 larger than 128 bits can be also utilized.

In an illustrative embodiment, when FP16 matrix multiplication operations utilize the accumulator circuit 719 for accumulations (e.g., within the MXM 117 or the MXM 118) with the precision of, e.g., a 91-bit integer, a register of the accumulator circuit 719 is at least 116 bits wide because 22 compressed carry bits and three status bits are used for carry information to enable calculations using a faster clock frequency. Accumulated multiplier results are converted from the 116-bit register of the accumulator circuit 719 with 91-bit integer precision to FP32 using a truncation/conversion circuit 720 coupled to an output of the accumulator circuit 719. The truncation/conversion circuit 720 may be part of the NIM 115 or the NIM 116, and the conversion may occur when the accumulated multiplier results are streamed from the MXM 117 or the MXM 118 to the VXM 110.

In another embodiment, for INT8 matrix multiplication operations and accumulation, a width of each partial output sum at the register of the accumulator circuit 719 is 25 bits. A total of four partial sums are concatenated to 100 bits at the register of the accumulator circuit 719 to achieve INT32 precision. The remaining bits in the register of the accumulator circuit 719 are not used. The value produced and stored at the register of the accumulator circuit 719 is in a fully loss-less INT32 format, i.e., the TP format with INT32 numerical representation.

In yet another embodiment, an accumulator in the NIM 115 (or in the NIM 116) performing a full sum operation would resolve compressed carry bits in a 112-bit word to 90-bits, and then accumulate multiple 256x256 matrix multiplication output values, with a maximum capacity to accumulate up to 2³⁸ 90-bit TP numbers into a single INT128. If matrix multiplications are interleaved, then the partial (interim) results are added separately. The VXM 110 may comprise an arbitrary precision arithmetic instruction that includes a carry that is persistent to the next clock cycle. Using an initial ADD_MOD, a series of ADD_MOD_CI instructions, and an optional final ADD_MOD_CI INT32 0,0 to get the final carry bit, any size INT can be accumulated at the accumulator circuit 719.

Because of a size of the accumulator circuit 719, no rounding (i.e., truncation) is applied during the accumulation in the accumulator circuit 719. The only rounding (i.e., truncation) is applied to a final accumulation result to obtain a final multiplication result of a desired floating point precision (e.g., FP16, FP32, FP 64 precision, or some other floating point precision). In one or more embodiments, significands of input operands are converted to integer format (e.g., at the conversion circuits 702, 703) enabling the multipliers 706A, ..., 706N, 708A, ..., 708M to perform a fused dot product operation instead of a fused multiply accumulate operation. The result of fused dot product operation is obtained and stored within the register of the accumulator circuit 719 to maintain a pre-defined precision, e.g., the precision of at least 80 bits. For example, when the multiplier circuity of FIG. 7 is utilized as a building block in functional units of the TSP core 100 (e.g., in the MXM 117 and/or the MXM 118), up to 320 partial results of the fused dot product operation can be accumulated in the accumulator circuit 719 without any truncation.

An accumulated result in the second format (e.g., TP format) stored in the register of the accumulator circuit 719 represents a complete multiplication result. The truncation/conversion circuit 720 coupled to the register of the accumulator circuit 719 converts the complete multiplication result of the second format (e.g., the TP number) into an output result of an output format that is stored in an output register 721. The truncation/conversion circuit 720 may convert the complete multiplication result from the second format into the output format by first selectively truncating a portion of the complete multiplication result stored in the register of the accumulator circuit 719. After the truncation, the truncation/conversion circuit 720 converts the complete multiplication result (i.e., the truncated accumulation result) into the output format, e.g., FP32 format, FP64 format, FP128 format, or some other floating point format. The conversion by the truncation/conversion circuit 720 may be based on a desired output precision provided to the truncation/conversion circuit 720 via an "Out_Format" signal, as shown in FIG. 7.

For example, the rounding (i.e., truncation) to the FP32 format in accordance with the IEEE 754 standard uses 8 bits to represent an exponent and 23 bits to represent a significand. For example, it can be shown that the accumulation at the accumulator circuit 719 with truncation of a final accumulated result to the FP32 format precision at the truncation/conversion circuit 720 provides the calculation rate of approximately 4.98 teraflops. Note that "one teraflops" represents a computing speed of one million floating point operations per second while providing numerical results with precision equivalent to a FP32 unit. The rounding (i.e., truncation) to the FP16 format in accordance with the IEEE 754 standard uses 5 bits for the exponent and 10 bits for the significand. It can be shown that the accumulation at the accumulator circuit 719 with truncation of a final accumulated result to the FP16 format precision at the truncation/conversion circuit 720 provides the calculation rate of approximately 403 teraflops. Additionally, the rounding (i.e., truncation) to FP16 representation with 8 exponent bits and 7 bits for the significand can be utilized, which can be denoted as bfloat16 or BF16. It can be shown that the accumulation at the accumulator circuit 719 with truncation of a final accumulated result to the BF16 format precision at the truncation/conversion circuit 720 provides the calculation rate of approximately 44.78 teraflops.

In one or more embodiments, as aforementioned, the decomposition circuit 704 performs the decomposition of large integers by applying the Toom-Cook decomposition algorithm in order to obtain smaller integers suitable for faster integer multiplications. Alternatively, the decomposition circuit 704 can apply the Toom-Cook3 decomposition algorithm. The decomposition circuit 704 that applies the Toom-Cook algorithm (or, alternatively, the Toom-Cook3 algorithm) can be a building block of the VXM 110, MXM 117 and/or the MXM 118 separate from digital multiplier circuitry.

A simplified version of the Toom-Cook decomposition algorithm is illustrated herein by way of example in the case of multiplying the pair of integers 23 and 35. The following polynomials that represent decomposed integers 23 and 35 are obtained: p(x) = 2x + 3, q(x) = 3x + 5, where p(x) represents decomposition of 23 into smaller integers 2 and 3, and q(x) represents decomposition of 35 into smaller integers 3 and 5, where x equals 10. Accordingly, the result of the multiplication would be p(x)*q(x) = r(x). Decomposing the significands of the first and second numbers into a first and second plurality of operands according to the Toom-Cook algorithm yields the polynomial equation (2x + 3)*(3x + 5) = ax² + bx + c = r(x) with smaller integers mutually multiplied, where a, b and c are unknown parameters. From p(0)*q(0) = r(0), it can be determined that c = 15. From p(1)*g(1) = r(1), it follows, after substitutions for x and c, that a + b = 25; and from p(-1)*q(-1) = r(-1), it follows, after substitutions for x and c, that a - b = -13. From the two linear equations with two unknowns a + b = 25 and a - b = -13, it can be determined that a = 6 and b = 19. Thus, the result of multiplication p(x)*q(x) = r(x) = 6x² + 19x + 15, By substituting x = 10 in r(x), the result of multiplication can be obtain as r(10) = 600 + 190 + 15 = 805.

In another example, the integers 7 and 22 are multiplied. In such case, two integer multiply operations would occur, and each time the partial result would be 14, but the correct numbers to be added are 140 and 14 yielding a proper final multiplication result of 154. However, the problem would occur when the least significant digit is truncated to obtain an approximate final result, which is typical in the case of rounding floating point numbers. Then, shifting the digits to account for the ones, tens, and hundreds columns (e.g., performed at the shift circuits 713A,..., 713N, 714A, ...., 714M) and the rounding (i.e., truncation) of the least significant digit (e.g., at the truncation/conversion circuit 720) would result in multiplying 10 with 10 yielding a final multiplication result of 100, instead of 154. Even if only the least significant digit of the partial multiplication result of 14 is dropped, the final multiplication result would still only be an approximation. This example illustrates what happens if the precision for accumulation of partial products at the accumulator circuit 719 is sacrificed in favor of computational speed and/or power dissipation.

In one or more embodiments, operands that are input into the multiplier circuitry of FIG. 7 are either represented in a signed or unsigned integer format (e.g., INT4 or INT8) or in a floating-point format (e.g., FP16 or FP32 format). The multiplier circuitry of FIG. 7 can be configured to identify the format of input operands, e.g., INT 8 format or FP16 format. Note that INT8 format of operands would require INT8 multiplications with INT32 accumulation, while FP16 format of input operands would require FP16 multiplication with FP32 accumulation. The multiplier circuitry of FIG. 7 supports INT8 multiplication. INT16 multiplication (with INT64 accumulation), INT32 multiplication (with INT128 accumulation), as well as the multiplication between INT8 operand and INT4 operand (e.g., when weight precision is not required).

In general, INT8 multiplications (with INT32 accumulation) have sufficient precision and accuracy for inference applications. It should be noted that precision and accuracy are two different requirements. The precision requirement is related to a number of bits for representation of a multiplication result, e.g., a 16-bit multiplication result. The accuracy requirement is related to whether the multiplication result is mathematically correct, e.g., whether the 16-bit result is mathematically correct or not.

Note that models in AI and/or ML applications (e.g., performed at the TSP core 100) are generally trained using floating point representation of numbers because the trained models require the fidelity to calculate converging differences between weights of a previous learning iteration and weights of a current learning iteration. Otherwise, the trained models would not converge as the differences would be greater than predetermined threshold values, i.e., the differences would be too large to converge. The multiplier circuitry of FIG. 7 (as a building block of the VXM110, the MXM 117 and/or the MXM 118) includes the conversion circuits 702, 703 to convert input operands (i.e., training weights) from a floating point format to an integer format for integer multiplications, as well as the truncation/conversion circuit 720 to convert the final accumulation result from the accumulator circuit 719 back to the floating point format. In one or more embodiments, the multiplier circuitry of FIG. 7 can be part of a common circuitry of the MXM 117 and/or the MXM 118 shared between the floating point type arithmetic and integer type arithmetic.

Input operands of the multiplier circuitry of FIG. 7 are either in integer format (e.g., INT8) or in floating-point format (e.g., FP16). The multiplier circuitry of FIG. 7 can handle inputs in either floating point format or integer format. In one or more embodiments, each multiplier 706A, ..., 706N, 708A, ..., 708M can input an operand that is either a signed integer, an unsigned integer or a floating point number. Each multiplier 706A, ..., 706N, 708A, ..., 708M may be configured (e.g., using an appropriate internal circuitry) to identify the input data type, perform required conversion if any (e.g., from the floating point format to integer format), and perform the integer multiply operations to generate partial products. Then, the partial products can be accumulated in the accumulation circuit using the TP format to obtain a final multiplication result as a sum of the partial products.

In one or more embodiments, when the input operands are in INT8 format, the multiplier circuitry of FIG. 7 can perform operations on two sets of integer input operands, and the final output products would be two 24-bit quantities, i.e., sums of integer products. Advantageously, 24-bits is sufficient to hold the sum of products between 255 and 255 (i.e., the largest operands for INT 8 format). The final products can be locally summed (e.g. as part of the VXM110, the MXM 117 and/or the MXM 118) by columns across the entire array for each column of the array.

Note that, for integer multiplication, there is no risk for overflow. However, in the case of multiplication of floating point numbers, there is a potential for overflow. Accordingly, the operands are converted to the TP format, e.g., at the conversion circuits 702, 703 or the conversion circuits 715A, ..., 715N, 716A, ..., 716M. The product of floating point multiply and accumulate operations are thus maintained in the TP format at the accumulator circuit 719. Thus, the multiplier circuitry of FIG. 7 can maintain results of the multiplications and summations in the TP format, which advantageously maintains absolute accuracy for operands spanning a range of numbers from very small numbers to very large numbers. The TP format maintains the complete number in its fixed point format and outputs the final result as a fixed point TP number and an exponent (before conversion to a desired floating point format).

By utilizing the TP format for accumulation of partial multiplication results, the multiplier circuitry of FIG. 7 accepts input operands for, e.g., matrix multiplication in FP16 format, but generate a final multiplication result that is output in, e.g., FP32 format, which is far more precise than FP16 format (e.g., because of 23 bits for the mantissa and 8 bits for the exponent). Accordingly, by utilizing integer multipliers and performing accumulation of partial products in the TP format, the multiplier circuitry of FIG. 7 effectively performs FP32 operations with a loss of precision less than a threshold value. Alternatively, the multiplier circuitry of FIG. 7 generates FP64 (or FP128) results from FP16 operands by truncating multiplication results to the appropriate number of bits.

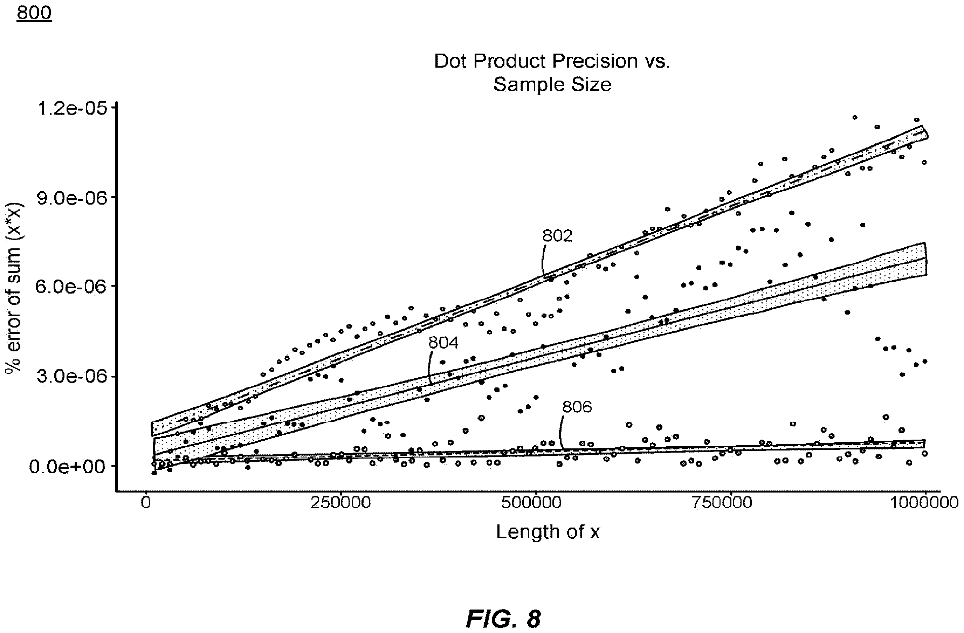

It should be noted that the integer multiplication with the accumulation based on the TP format provides improved precision for AI and/or ML workloads. FIG. 8 is a graph 800 of dot product precisions as a function of sample size for dot product multiplications performed using different formats. A plot 802 shows a dot product precision as a function of sample size for the dot product operation performed using FP32 based multiplications. A plot 804 shows a dot product precision as a function of sample size for the dot product operation performed using FP32 sorted multiplications. It can be observed from the plots 802 and 804 that the precision of dot product operations worsens as a sample size increases, i.e., as a number of accumulation operations increases. A plot 806 shows a dot product precision as a function of sample size for the dot product operation performed by the multiplier circuitry of FIG. 7 with input operands in FP16 format, the accumulation of partial products performed in the TP format (e.g., the accumulator circuit 719), and the final multiplication result being output in FP32 format. It can be observed from the plot 806 that that the precision of dot product operations that utilize the TP format is superior to that of the traditional FP32 multiplications and FP32 sorted multiplications. Also, the precision of dot product operations based the TP format is virtually unchanged as a number of accumulation operations increases (i.e., as a sample size increases).

Therefore, the TP based calculations provide improved latency and throughput, while providing the most accurate floating point results. To achieve the same accuracy when training a ML model on a single core of a CPU or GPU using the same weights and same inputs, CPU or GPU based systems would have to accumulate to, e.g., FP128 precision format. Advantageously, the presented TP based multiply-and-accumulate (MAC) operations running on the TSP core 100 utilize FP16 operands and generate FP32 results, with accuracy that is significantly better than that of a GPU or CPU.

Energy and performance cost for higher-precision numeric calculations can be significant in many applications. However, the TP format can be also a key enabler for low power calculations when calculations involve utilizing floating point formats. It is known that energy required to compute products of operands in FP16 format is less than energy required to compute products of operands represented in wider formats, e.g., FP32 or FP64 formats. For example, it can be shown that FP32 based calculations consume approximately four times the energy compared to FP16 based calculations. To take energy advantage of mixed-precision applied at the multiplier circuitry of FIG. 7 for, e.g., a 320-element fused dot product with a single rounding step, the input operands are in FP16 formats whereas the dot product is accumulated and then output in FP32 format. For example, 320-element SIMD instructions of the TSP core 100 allow the instruction fetch and decode energy to be amortized across 320 operations. Each MEM slice of MEMs 111, 112 may access approximately 8,000 320-element vectors, keeping SRAM access cost low compared to traditional cache hierarchies.

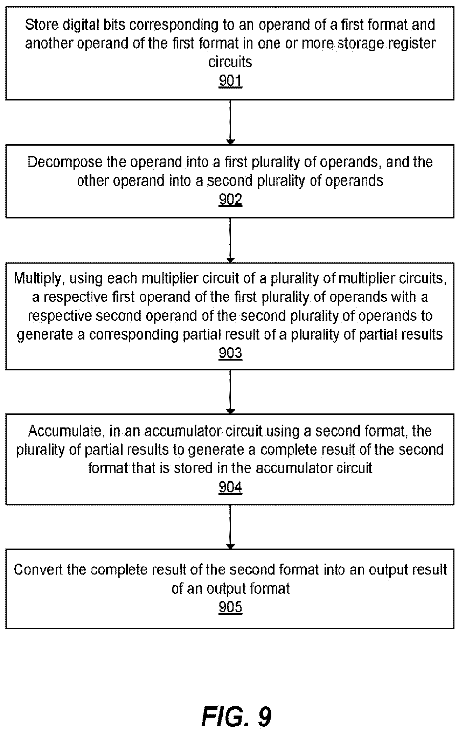

FIG. 9 illustrates a method for integer multiplication with the TP based accumulation according to an embodiment. At 901, digital bits corresponding to an operand of a first format and another operand of the first format are stored in one or more storage register circuits. At 902, the operand is decomposed into a first plurality of operands, and the other operand is decomposed into a second plurality of operands. At 903, a respective first operand of the first plurality of operands is multiplied with a respective second operand of the second plurality of operands using each multiplier circuit of a plurality of multiplier circuits to generate a corresponding partial result of a plurality of partial results. At 904, the plurality of partial results are accumulated in an accumulator circuit using a second format to generate a complete result of the second format that is stored in the accumulator circuit. At 905, the complete result of the second format is converted into an output result of an output format.

Embodiments of the present disclosure further relate to various methods for conversion of FP numerical representation (e.g., FP32 or BF16) of input operands (e.g., activations and weights) for performing element-wise operations, e.g., element-wise multiplications between an activation matrix and a weight matrix - MATMUL. In some embodiments, in a first method, all exponents of the input operands are sorted by range. In one embodiment, in a first sub-method of the first method, all input numbers (e.g., matrix elements) are first pre-processed by being sorted into groups each having a respective range of exponent. Note that each exponent can be within one of the following ranges: 2ⁿ-2 to 1, 2ⁿ×2-4 to 2ⁿ-1, 2ⁿ×3-6 to 2ⁿ×2-3, 2ⁿ×4-8 to 2ⁿ×3-5, 2ⁿ×5-10 to 2ⁿ×4-7, 2ⁿ×6-12 to 2ⁿ×5-9, 2ⁿ×7-14 to 2ⁿ×6-11, 2ⁿ×8-16 to 2ⁿ×7-13, 2ⁿ×9-34 to 2ⁿ×8-15, where n is a number of bits for representing the exponent. Second, numbers (e.g., matrix elements) from each group are normalized to be within a defined exponent range of the MATMUL while keeping track which range each group was in before the normalization. Third, an element-wise operation (e.g., multiplication) is performed on the normalized numbers from each activations group and weights group obtained at the second step. Fourth, an intermediate result is adjusted to align with the original range. Fifth, accumulation with previous group result(s) is performed. Sixth, if any groups remain, the third, fourth and fifth steps are repeated. Seventh, once all the groups are completed, final accumulation and conversion to the final format are performed. The first sub-method of the first method utilizes the TP format on intermediate results, and no error is introduced until the final conversion. The first sub-method of the first method requires (roundup (exponent range of inputs / exponent range of matrix))² passes in the matrix × matrix size/ MATMUL matrix size plus pre-processing and post-processing cycles to complete.

In another embodiment, in a second sub-method of the first method, all matrix weights are first pre-processed to belong into the same range. An exponent of a respective matrix weight can be within one of the following range: 2ⁿ-2 to 1, 2ⁿ×2-4 to 2ⁿ-1, 2ⁿ×3-6 to 2ⁿ×2-3, 2ⁿ×4-8 to 2ⁿ×3-5, 2ⁿ×5-10 to 2ⁿ×4-7, 2ⁿ×6-12 to 2ⁿ×5-9, 2ⁿ×7-14 to 2ⁿ×6-11, 2ⁿ×8-16 to 2ⁿ×7-13, 2ⁿ×9-34 to 2ⁿ×8-15, where n is a number of bits for the exponent. Second, the largest intermediate exponent N is pre-processed, and all values with exponent less than (e-log₂(m)-s) are zeroed out, where m is a number of operations to perform, e is a size exponent in the final format, s is a size significand for conversion, and e ≥ N. Third, activations are re-sorted and the zeroed out values are removed. Fourth, all matrix activations are pre-processed to belong into the same range. Fifth, each group of activations is normalized to be in the exponent range of the MATMUL, while keeping track which range each group was in before the normalization. Sixth, an element-wise operation (e.g., multiplication) is performed on a current normalized activations group and pre-processed weights. Seventh, an intermediate result is adjusted to align with the original range. Eighth, accumulation with previous groups result(s) is performed. Ninth, once all the groups are completed, final accumulation and conversion to the final format is performed. The second sub-method of the first method throws away values up front that would not make a difference in the final conversion. The second sub-method of the first method utilizes the TP format on intermediate results. The second sub-method of the first method have the potential to introduce error on the least significant bit (LSB) region and requires more pre-processing than the first sub-method of the first method.

In some other embodiments, in a second method of a limited range, only most significant bits (MSBs) of exponents of the input operands (e.g., activations and weights) are utilized. In one embodiment, in a first sub-method of the second method, pre-processing of the input operands is first performed and only m MSBs of an exponent of each input number are used. Second, the input numbers are pre-processed by breaking the input numbers into n significands where n = roundup(significant bits in/significant bits in matrix unit) for zero internal error, or n = truncation(significant bits in/significant bits in matrix unit) for non-zero internal error. Third, an element-wise operation (e.g., multiplication) is performed on each activations group and weights group obtained at the second step. Fourth, an intermediate result is adjusted to align with an original significand. Fifth, accumulation with previous groups result(s) is performed. Sixth, if any groups remain, the third, fourth and fifth steps are repeated. Seventh, once all the groups are completed, final accumulation is performed, followed by adjustment to the original range and conversion to the final format. The first sub-method of the second method introduces a precision error in two ways. First, the precision error is introduced by limiting the exponents. Second, the precision error is non-zero if the number of sub-significands times the significand bits in the matrix is less than the number of input significand bits. The first sub-method of the second method requires a number of passes to complete the matrix that is significantly less than for the first and second sub-methods of the first method. For conversion to the final format that is FP32, the first sub-method of the second method requires just four to nine passes to complete the matrix depending on the sub-significands (i.e., depending whether the truncation or roundup is performed at the second step).

In another embodiment, in a second sub-method of the second method, pre-processing of all activations is first performed including normalization to a highest exponent bit that is "1" (that particular bit and the m-1 MSBs are used after that). Second, activations are pre-processed by breaking them into n significands where n = roundup(significant bits in/significant bits in matrix unit) for zero internal error or n = truncation(significant bits in/significant bits in matrix unit) for non-zero internal error. Third, all weights are pre-processed and normalized to a highest exponent bit that is "1" and use that bit plus the m-1 MSBs after that. Fourth, the normalized weights are pre-processed by breaking them into n significands where n = roundup(significant bits in/significant bits in matrix unit) for zero internal error or n = truncation(significant bits in/significant bits in matrix unit) for non-zero internal error. Fifth, an element-wise operation (e.g., multiplication) is performed on each activations group and weights group obtained are the second and the fourth steps. Sixth, an intermediate result is adjusted to align with an original significand. Seventh, accumulation with previous groups result(s) is performed. Eighth, if any groups remain, the third, fourth, fifth, sixth and seventh steps are repeated. Ninth, once all the groups are completed, final accumulation is performed, followed by adjustment to the original range and conversion to the final format. The second sub-method of the second method introduces a potential precision error in two ways. First, the potential precision error can occur due to limiting the exponents. Second, if the number of bits for sub-significands times the significant bits in the matrix is less than the number of input significant bits, the potential precision error is introduced. The number of passes required to complete the matrix is significantly less for the second sub-method of the second method than for the first and second sub-methods of the first method. For conversion to the final format of FP32, the second sub-method of the second method requires just four to nine passes to complete the matrix depending on the sub-significands (i.e., depending whether the truncation or roundup is performed at the second and fourth steps). The second sub-method of the second method has the potential to be more accurate than the first sub-method of the second method.

In yet another embodiment, in a third sub-method of the second method, the first step is to force a format of input exponents to only use the range of the matrix unit. Second, all input numbers (activations and weights) are pre-processed by breaking them into n significands where n = roundup(significant bits in/significant bits in matrix unit) for zero internal error or n = truncation(significant bits in/significant bits in matrix unit) for non-zero internal error. Third, an element-wise operation (e.g., multiplication) is perform on each activations group and weights group obtained at the second step. Fourth, an intermediate result is adjusted to align with an original significand. Fifth, accumulation with previous groups result(s) is performed. Sixth, if any groups remain, the third, fourth and fifth steps are repeated. Seventh, once all groups are completed, final accumulation is performed, followed by adjustment to the original range and conversion to the final format. The third sub-method of the second method forces the input range to match the limited range of the matrix for the exponent. If the roundup is used at the second step, no error is introduced until the final conversion. The third sub-method of the second method matches a throughput of the first sub-method of the second method. However, the third sub-method of the second method does not introduce any precision or range error during the processing of matrix elements.

In some other embodiments, in a third method, exponents are broken into N m-bit units. In one embodiment, in a first sub-method of the third method, pre-processing of all input numbers (i.e., activations and weights) is first performed by breaking the exponent portion in equal bits (or near equal bits) under the size of the matrix unit exponent size. Second, pre-processing of the input numbers generated at the first step into n significands is performed where n = roundup(significant bits in/significant bits in matrix unit) for zero internal error or n = truncation(significant bits in/significant bits in matrix unit) for non-zero internal error. Third, an element-wise operation (e.g., multiplication) is perform on each activations group and weights group obtained at the second step. Fourth, an intermediate result is adjusted to align with the original range. Fifth, accumulation with previous group result(s) is performed. Sixth, if any groups remain, the third, fourth and fifth steps are repeated. Seventh, once all groups are completed, final accumulation and conversion to the final format are performed. The first sub-method of the third method utilizes the TP format for intermediate results, and no error is introduced until the final conversion, if the roundup is used at the second step. The first sub-method of the third method requires N equal exponents times N equal exponents times n significands times n significands passes for each matrix to complete. For FP32 to FP16 full range conversion (i.e., the input operands having F32 format and the final output format is FP16), the first sub-method of the third method with full precision requires, e.g., 2×2×3×3 = 36 passes to complete the matrix operation.

In another embodiment, in a second sub-method of the third method with a limited significand, pre-processing of all input numbers (i.e., activations and weights) is first performed by breaking each exponent portion in equal bits (or near equal bits) under the size of the matrix unit exponent size. Second, all significands are truncated to match the size of the matrix unit significand. Third, an element-wise operation (e.g., multiplication) is perform on each activations group and weights group obtained at the second step. Fourth, an intermediate result is adjusted to align with the original range. Fifth, accumulation with previous group result(s) is performed. Sixth, if any groups remain, the third, fourth and fifth steps are repeated. Seventh, once all groups are completed, final accumulation and conversion to the final output format are performed. The second sub-method of the third method keeps the complete range of the original input numbers but limits the precision to an internal matrix. By applying the second sub-method of the third method, the number of passes for each matrix with FP32 format is just four. The number of passes for each matrix with BF16 format is also four, but the second sub-method of the third method provides a better precision for FP32 format than for BF16 format until the final conversion.

In some embodiments, the accumulation as part of the matrix multiplication can be performed in the extended variable precision TP format. An amount of accumulated precision required for a given matrix multiple accumulation (MATMUL) can be dynamically changed. In an embodiment, when performing N × N FP16 MATMUL that is a size of an internal matrix, no extension is required in the final accumulation and conversion to obtain a final output format. In another embodiment, when performing, e.g., 2¹⁶ × 2¹⁶ N × N FP16 MATMUL, an intermediate accumulation (i.e., accumulation of partial products) is required to be extended by 32 bits to keep from overflowing the final result during the accumulation. In yet another embodiment, when performing, e.g., 2⁶⁴ × 2⁶⁴ N × N FP16 MATMUL, an intermediate accumulation (i.e., accumulation of partial products) is extended by 128 bits to keep from overflowing the final result during the accumulation. In each of these cases, no error is introduced for precision or accuracy until the final conversion to the final format. Furthermore, in each of these cases, the minimum final format is FP32 in order to maintain a complete range for the final result without overflow during the accumulation.

In yet another embodiment, when performing, e.g., 2¹⁶ × 2¹⁶ 256 × 256 FP32 MATMUL in a 256 × 256 FP16 matrix, an intermediate accumulation (i.e., accumulation of partial products) is extended by a total of 512 bits to keep from overflowing the final result during the accumulation. The total of 512 bits required for extension of the intermediate accumulation is due to, e.g., 32 bits required for the size of the FP32 MATMUL, plus 564 bits for FP32 TP, minus 90 bits for FP16, plus roundup log₂36 bits (i.e., 6 bits) as one FP32 matrix operation requires 36 FP16 operations for full range and precision TP assuming 256 × 256 base matrix size. Again, no error is introduced for precision or accuracy until the final conversion to the final format. In such case, the minimum final output format is FP64 in order to maintain a complete range for the final result without overflow during the accumulation.

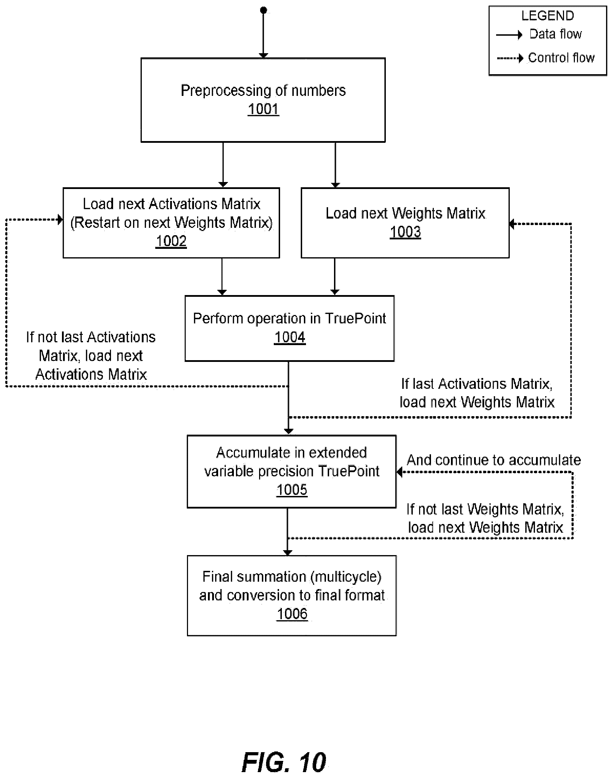

FIG. 10 illustrates a method for floating point conversion during element-wise matrix operations according to an embodiment. An accumulation as part of the element-wise matrix operations (e.g., matrix multiplications) can be performed in the extended variable precision TP format. At 1001, input numbers (e.g., elements of activations matrix and weights matrix) are preprocessed. At 1002, a next activations matrix is loaded, which becomes a current activations matrix. At 1003, a next weights matrix is loaded, which becomes a current weights matrix. Note that, in some cases (e.g., when the next activations matrix and the next weights matrix are loaded for the first time) the steps 1002 and 1003 can be performed simultaneously or near simultaneously. Also note that the step 1002 of loading the next activations matrix is restarted on every next weights matrix. At 1004, an element-wise operation (e.g., element-wise multiplication) between corresponding elements of the current activations matrix and the current weights matrix is performed using, e.g., the TP format. If the current activations matrix is not a last activations matrix, the method returns to the step 1002 for loading a next activations matrix that becomes the current activations matrix. On the other hand, if the current activations matrix is the last activations matrix, the method returns to the step 1003 for loading a next weights matrix that becomes the current weights matrix (which also initiates restarting load of a next activations matrix at the step 1002). At 1005, accumulation is performed in, e.g., the aforementioned extended variable precision TP format. If the current weights matrix is not the last weights matrix, loading of a next weights matrix is performed (at step 1003) and accumulation is applied on intermediate operation results obtained at the step 1004 where the newly loaded weights matrix is used for the element-wise operation. After all weights matrices are loaded and the accumulation at the step 1005 is finished, final (multicycle) summation and conversion to the final format is performed at 1006.

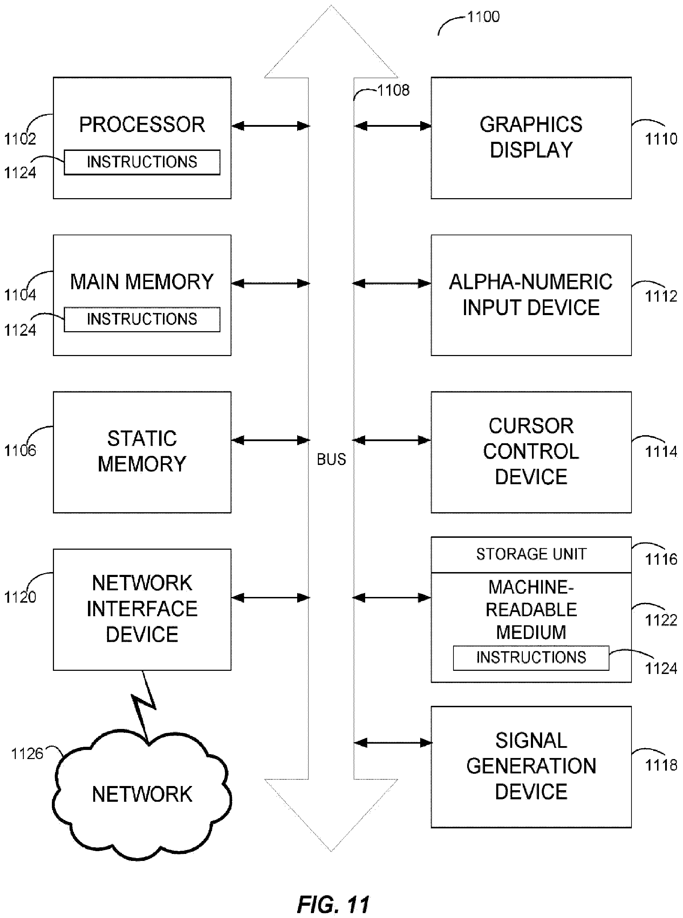

FIG. 11 is a block diagram illustrating components of an example computing machine that is capable of reading instructions from a computer-readable medium and execute them in a processor (or controller) according to an embodiment. A computer described herein may include a single computing machine shown in FIG. 11, a virtual machine, a distributed computing system that includes multiple nodes of computing machines shown in FIG. 11, or any other suitable arrangement of computing devices. The computer described herein may be used by any of the elements described in the previous figures to execute the described functions.

By way of example, FIG. 11 depicts a diagrammatic representation of a computing machine in the example form of a computer system 1100 within which instructions 1124 (e.g., software, program code, or machine code), which may be stored in a computer-readable medium, causing the machine to perform any one or more of the processes discussed herein. In some embodiments, the computing machine operates as a standalone device or may be connected (e.g., networked) to other machines. In a networked deployment, the machine may operate in the capacity of a server machine or a client machine in a server-client network environment, or as a peer machine in a peer-to-peer (or distributed) network environment.

The structure of a computing machine described in FIG. 11 may correspond to any software, hardware, or combined components shown in the figures above. By way of example, a computing machine may be a tensor streaming processor designed and manufactured by Groq, Inc. of Mountain View, California, a personal computer (PC), a tablet PC, a set-top box (STB), a personal digital assistant (PDA), a cellular telephone, a smartphone, a web appliance, a network router, an internet of things (IoT) device, a switch or bridge, or any machine capable of executing instructions 1124 that specify actions to be taken by that machine. Further, while only a single machine is illustrated, the term "machine" shall also be taken to include any collection of machines that individually or jointly execute instructions 1124 to perform any one or more of the methodologies discussed herein

The example computer system 1100 includes one or more processors (generally, a processor 1102) (e.g., a central processing unit (CPU), a graphics processing unit (GPU), a digital signal processor (DSP), one or more application specific integrated circuits (ASICs), one or more radio-frequency integrated circuits (RFICs), or any combination of these), a main memory 1104, and a static memory 1106, which are configured to communicate with each other via a bus 1108. The computer system 1100 may further include graphics display unit 1110 (e.g., a plasma display panel (PDP), a liquid crystal display (LCD), a projector, or a cathode ray tube (CRT)). The computer system 1100 may also include alphanumeric input device 1112 (e.g., a keyboard), a cursor control device 1114 (e.g., a mouse, a trackball, a joystick, a motion sensor, or other pointing instrument), a storage unit 1116, a signal generation device 1118 (e.g., a speaker), and a network interface device 1120, which also are configured to communicate via the bus 1108.

The storage unit 1116 includes a computer-readable medium 1122 on which the instructions 1124 are stored embodying any one or more of the methodologies or functions described herein. The instructions 1124 may also reside, completely or at least partially, within the main memory 1104 or within the processor 1102 (e.g., within a processor's cache memory). Thus, during execution thereof by the computer system 1100, the main memory 1104 and the processor 1102 may also constitute computer-readable media. The instructions 1124 may be transmitted or received over a network 1126 via the network interface device 1120.

While the computer-readable medium 1122 is shown in an example embodiment to be a single medium, the term "computer-readable medium" should be taken to include a single medium or multiple media (e.g., a centralized or distributed database, or associated caches and servers) able to store instructions (e.g., the instructions 1124). The computer-readable medium 1122 may include any medium that is capable of storing instructions (e.g., the instructions 1124) for execution by the machine and that cause the machine to perform any one or more of the methodologies disclosed herein. The computer-readable medium 1122 may include, but not be limited to, data repositories in the form of solid-state memories, optical media, and magnetic media. The computer-readable medium 1122 does not include a transitory medium such as a signal or a carrier wave.

The above specification provides illustrative and example descriptions of various embodiments. While the present disclosure illustrates various techniques and embodiments as physical circuitry (e.g., on an integrated circuit), it is to be understood that such techniques and innovations may also be embodied in a hardware description language program such as VHDL or Verilog as is understood by those skilled in the art. A hardware description language (HDL) is a specialized computer language used to describe the structure and behavior of electronic circuits, including digital logic circuits. A hardware description language results in an accurate and formal description of an electronic circuit that allows for the automated analysis and simulation of an electronic circuit. An HDL description may be synthesized into a netlist (e.g., a specification of physical electronic components and how they are connected together), which can then be placed and routed to produce the set of masks used to create an integrated circuit including the elements and functions described herein.

Any of the steps, operations, or processes described herein may be performed or implemented with one or more hardware or software modules, alone or in combination with other devices. In one embodiment, a software module is implemented with a computer program product comprising a computer-readable medium containing computer program code, which can be executed by a computer processor for performing any or all of the steps, operations, or processes described.

Embodiments of the disclosure may also relate to an apparatus for performing the operations herein. This apparatus may be specially constructed for the required purposes, and/or it may comprise a general-purpose computing device selectively activated or reconfigured by a computer program stored in the computer. Such a computer program may be stored in a non-transitory, tangible computer readable storage medium, or any type of media suitable for storing electronic instructions, which may be coupled to a computer system bus. Furthermore, any computing systems referred to in the specification may include a single processor or may be architectures employing multiple processor designs for increased computing capability.

Some embodiments of the present disclosure may further relate to a system comprising a processor (e.g., a tensor streaming processor or an artificial intelligence processor), at least one computer processor (e.g., a host server), and a non-transitory computer-readable storage medium. The storage medium can store computer executable instructions, which when executed by the compiler operating on the at least one computer processor, cause the at least one computer processor to be operable for performing the operations and techniques described herein.

Finally, the language used in the specification has been principally selected for readability and instructional purposes, and it may not have been selected to delineate or circumscribe the inventive subject matter. It is therefore intended that the scope of the disclosure be limited not by this detailed description, but rather by any claims that issue on an application based hereon. Accordingly, the disclosure of the embodiments is intended to be illustrative, but not limiting, of the scope of the disclosure, which is set forth in the following claims.

Further features and aspects of the invention may reside in the below clauses.
1. A method comprising:
   storing digital bits corresponding to an operand of a first format and another operand of the first format in one or more storage register circuits;
   decomposing the operand into a first plurality of operands;
   decomposing the other operand into a second plurality of operands;
   multiplying, using each multiplier circuit of a plurality of multiplier circuits, a respective first operand of the first plurality of operands with a respective second operand of the second plurality of operands to generate a corresponding partial result of a plurality of partial results;
   accumulating, in an accumulator circuit using a second format, the plurality of partial results to generate a complete result of the second format that is stored in the accumulator circuit; and
   converting the complete result of the second format into an output result of an output format.
2. The method of clause 1, further comprising:
   decomposing the operand and the other operand by applying a Toom-Cook decomposition algorithm; and
   converting the operand and the other operand from a floating point format into an integer format prior to the decomposition.
3. The method of clause 1, further comprising converting the plurality of partial results from the first format to the second format before the accumulation.
4. The method of clause 1, further comprising:
   adding corresponding exponent portions of the operand and the other operand to generate a plurality of exponent values; and
   shifting a respective partial result of the plurality of partial results before the accumulation based on a corresponding exponent value of the plurality of exponent values to generate a corresponding shifted partial result of a plurality of shifted partial results.
5. The method of clause 4, further comprising converting the corresponding shifted partial result from the first format to the second format before the accumulation.
6. The method of clause 1, wherein:
   the first format is selected from one of an INT8 format, an INT16 format, a BF16 format, a FP16 format and a FP32 format; and
   the output format is one of a FP32 format and a FP64 format.
7. The method of clause 1, wherein converting the complete result of the second format into the output result of the output format comprises truncating the complete result stored in the accumulator circuit based on the output format.
8. The method of clause 1, further comprising accumulating the plurality of partial results from a smallest partial result among the plurality of partial results to a largest partial result among the plurality of partial results.
9. A method for an integer multiplication, the method comprising:
   storing digital bits corresponding to an operand of a first format and another operand of the first format;
   decomposing the operand and the other operand into a plurality of operands;
   multiplying a respective first operand of a first subset of the operands with a respective second operand of a second subset of the operands to generate a corresponding partial result of a plurality of partial results; and
   generating a complete result of a second format by accumulating the plurality of partial results in an accumulator circuit using the second format.
10. The method of clause 9, further comprising:
   decomposing the operand into the first subset of operands using a Toom-Cook decomposition algorithm; and
   decomposing the other operand into the second subset of operands using the Toom-Cook decomposition algorithm.
11. The method of clause 9, wherein:
   the first format is selected from one of an INT8 format, an INT16 format, a BF16 format, a FP16 format and a FP32 format; and
   the second format is the TruePoint format.
12. The method of clause 9, wherein the accumulator circuit comprises a register configured to store the complete result of the second format, and a size of the register is 128 bits.
13. The method of clause 9, wherein a plurality of components of a streaming processor performs operations of the integer multiplication.
14. The method of clause 13, wherein the plurality of components comprises the accumulator circuit and a plurality of integer multipliers, a respective integer multiplier of the plurality of integer multipliers configured to multiply the respective first operand with the respective second operand.
15. The method of clause 9, further comprising:
   converting the complete result of the second format into an output result of an output format.
16. The method of clause 15, wherein the output format is one of a FP32 format and a FP64 format.
17. A method for performing element-wise operations between input operands of a first array and a second array, the method comprising:
   sorting exponents of the input operands by range into a plurality of exponent ranges;
   sorting a first subset of the input operands from the first array into a first plurality of groups each having a respective exponent range;
   sorting a second subset of the input operands from the second array into a second plurality of groups each having the respective exponent range;
   normalizing operands from each group of the first and second plurality of groups to be within a corresponding exponent range to generate first normalized operands in the first groups and second normalized operands in the
      second groups;
   executing element-wise operations on a corresponding subset of the first normalized operands and a corresponding subset of the second normalized operands to generate a respective intermediate result of a plurality of intermediate results for each group of the first plurality of groups and each group of the second plurality of groups; and
   executing an accumulation of the respective intermediate result with one or more previously obtained intermediate results of the plurality of intermediate results.
18. The method of clause 17, wherein the first array of the input operands comprises an activations matrix and the second array of the input operands comprises a weights matrix.
19. The method of clause 18, wherein the element-wise operations comprise elementwise multiplications between corresponding elements of the activations matrix and the weights matrix.
20. The method of clause 17, wherein the input operands have a numerical format selected from one of a FP16 format, a FP32 format, and a BF16 format.
21. The method of clause 17, further comprising:
   aligning the respective intermediate result with a defined range prior to the accumulation.
22. The method of clause 17, further comprising:
   executing a final accumulation of a final intermediate result to generate a final result, when all groups from the first and second plurality of groups are completed; and
   executing a final conversion of the final result into a final format.
23. The method of clause 22, wherein no error is introduced until the final conversion.
24. The method of clause 22, wherein the final format selected from one of a FP32 format, a FP64 format, and a FP128 format.
25. The method of clause 17, further comprising:
   converting the respective intermediate result to the TruePoint format prior to the accumulation.
26. The method of clause 17, wherein a plurality of components of a streaming processor performs steps of the element-wise operations between the input operands of the first and second arrays.
27. A non-transitory computer-readable storage medium comprising stored instructions, the instructions when executed by a processor cause the processor to:
   store digital bits corresponding to an operand of a first format and another operand of the first format;
   decompose the operand and the other operand into a plurality of operands;
   multiply a respective first operand of a first subset of the operands with a respective second operand of a second subset of the operands to generate a corresponding partial result of a plurality of partial results; and
   generate a complete result of a second format by accumulating the plurality of partial results in an accumulator circuit using the second format.
28. The computer-readable storage medium of clause 27, comprising further stored instructions that when executed causes the processor to:
   decompose the operand into the first subset of operands using a Toom-Cook decomposition algorithm; and
   decompose the other operand into the second subset of operands using the Toom-Cook decomposition algorithm.
29. The computer-readable storage medium of clause 27, wherein:
   the first format is selected from one of an INT8 format, an INT16 format, a BF16 format, a FP16 format and a FP32 format; and
   the second format is the TruePoint format.
30. The computer-readable storage medium of clause 27, wherein the accumulator circuit comprises a register configured to store the complete result of the second format, and a size of the register is 128 bits.
31. The computer-readable storage medium of clause 27, wherein the processor is a streaming processor.
32. The computer-readable storage medium of clause 31, wherein the streaming processor comprises the accumulator circuit and a plurality of integer multipliers, a respective integer multiplier of the plurality of integer multipliers configured to multiply the respective first operand with the respective second operand.
33. The computer-readable storage medium of clause 27, comprising further stored instructions that when executed causes the processor to:
   convert the complete result of the second format into an output result of an output format.
34. The computer-readable storage medium of clause 33, wherein the output format is one of a FP32 format and a FP64 format.
35. A non-transitory computer-readable storage medium comprising stored instructions, the instructions when executed by a processor cause the processor to:
   sort exponents of input operands of a first array and a second array by range into a plurality of exponent ranges;
   sort a first subset of the input operands from the first array into a first plurality of groups each having a respective exponent range;
   sort a second subset of the input operands from the second array into a second plurality of groups each having the respective exponent range;
   normalize operands from each group of the first and second plurality of groups to be within a corresponding exponent range to generate first normalized operands in the first groups and second normalized operands in the second groups;
   execute element-wise operations on a corresponding subset of the first normalized operands and a corresponding subset of the second normalized operands to generate a respective intermediate result of a plurality of intermediate results for each group of the first plurality of groups and each group of the second plurality of groups; and
   execute an accumulation of the respective intermediate result with one or more previously obtained intermediate results of the plurality of intermediate results.
36. The computer-readable storage medium of clause 35, wherein the first array of the input operands comprises an activations matrix and the second array of the input operands comprises a weights matrix.
37. The computer-readable storage medium of clause 36, wherein the element-wise operations comprise element-wise multiplications between corresponding elements of the activations matrix and the weights matrix.
38. The computer-readable storage medium of clause 35, wherein the input operands have a numerical format selected from one of a FP16 format, a FP32 format, and a BF16 format.
39. The computer-readable storage medium of clause 35, comprising further stored instructions that when executed causes the processor to:
   align the respective intermediate result with a defined range prior to the accumulation.
40. The computer-readable storage medium of clause 35, comprising further stored instructions that when executed causes the processor to:
   execute a final accumulation of a final intermediate result to generate a final result, when all groups from the first and second plurality of groups are completed; and
   execute a final conversion of the final result into a final format.
41. The computer-readable storage medium of clause 40, wherein no error is introduced until the final conversion.
42. The computer-readable storage medium of clause 40, wherein the final format selected from one of a FP32 format, a FP64 format, and a FP128 format.
43. The computer-readable storage medium of clause 35, comprising further stored instructions that when executed causes the processor to:
   convert the respective intermediate result to the TruePoint format prior to the accumulation.
44. The computer-readable storage medium of clause 35, wherein the processor is a streaming processor.

## Claims

1. A method for performing element-wise operations between input operands of a first array and a second array, the method comprising:
sorting exponents of the input operands by range into a plurality of exponent ranges;
sorting a first subset of the input operands from the first array into a first plurality of groups each having a respective exponent range;
sorting a second subset of the input operands from the second array into a second plurality of groups each having the respective exponent range;
normalizing operands from each group of the first plurality of groups and the second plurality of groups to be within a corresponding exponent range to generate first normalized operands in the first plurality of groups and second normalized operands in the second plurality of groups;
executing (1004) element-wise operations on a corresponding subset of the first normalized operands and a corresponding subset of the second normalized operands to generate a respective intermediate result of a plurality of intermediate results for each group of the first plurality of groups and each group of the second plurality of groups; and
executing (1005) an accumulation of the respective intermediate result with one or more previously obtained intermediate results of the plurality of intermediate results.

2. The method of Claim 1, wherein the first array of the input operands comprises an activations matrix and the second array of the input operands comprises a weights matrix.

3. The method of Claim 2, wherein the element-wise operations comprise element-wise multiplications between corresponding elements of the activations matrix and the weights matrix.

4. The method of Claim 1, wherein the input operands have a numerical format selected from one of a FP16 format, a FP32 format, and a BF16 format.

5. The method of Claim 1, further comprising:
aligning the respective intermediate result with a defined range prior to the accumulation.

6. The method of Claim 1, further comprising:
executing a final accumulation of a final intermediate result to generate a final result, when all groups from the first plurality of groups and the second plurality of groups are completed; and
executing (1006) a final conversion of the final result into a final format.

7. The method of Claim 6, wherein no error is introduced until the final conversion.

8. The method of Claim 6, wherein the final format is selected from one of a FP32 format, a FP64 format, and a FP128 format.

9. The method of Claim 1, further comprising:
converting the respective intermediate result to a fixed point format represenation prior to the accumulation.

10. The method of Claim 1, wherein a plurality of components of a streaming processor performs steps of the element-wise operations between the input operands of the first array and the second array.

11. A non-transitory computer-readable storage medium (1122) comprising stored instructions (1124), the instructions (1124), when executed by a processor (1102), cause the processor to:
sort exponents of input operands of a first array and a second array by range into a plurality of exponent ranges;
sort a first subset of the input operands from the first array into a first plurality of groups each having a respective exponent range;
sort a second subset of the input operands from the second array into a second plurality of groups each having the respective exponent range;
normalize operands from each group of the first plurality of groups and the second plurality of groups to be within a corresponding exponent range to generate first normalized operands in the first plurality of groups and second normalized operands in the second plurality of groups;
execute (1004) element-wise operations on a corresponding subset of the first normalized operands and a corresponding subset of the second normalized operands to generate a respective intermediate result of a plurality of intermediate results for each group of the first plurality of groups and each group of the second plurality of groups; and
execute (1005) an accumulation of the respective intermediate result with one or more previously obtained intermediate results of the plurality of intermediate results.

12. The non-transitory computer-readable storage medium (1122) of Claim 11, wherein the first array of the input operands comprises an activations matrix and the second array of the input operands comprises a weights matrix.

13. The non-transitory computer-readable storage medium (1122) of Claim 11, comprising further stored instructions that when executed causes the processor to:
align the respective intermediate result with a defined range prior to the accumulation.

14. The non-transitory computer-readable storage medium (1122) of Claim 11, comprising further stored instructions that when executed causes the processor to:
execute a final accumulation of a final intermediate result to generate a final result, when all groups from the first plurality of groups and the second plurality of groups are completed; and
execute (1006) a final conversion of the final result in a fixed point format representation into a final floating point format.

15. The non-transitory computer-readable storage medium (1122) of Claim 11, wherein the processor is a streaming processor.
